(19) 

Europäisches
Patentamt
European
Patent Office
Office européen
des brevets

(11)  **EP 4 258 259 B1**

(12)  **EUROPEAN PATENT SPECIFICATION**

(45) Date of publication and mention
of the grant of the patent:
**27.08.2025  Bulletin 2025/35**

(51) International Patent Classification (IPC):
***G10L 15/08*** *(2006.01)*

(21) Application number: **21920812.1**

(22) Date of filing: **15.12.2021**

(52) Cooperative Patent Classification (CPC):
**G10L 15/08; G01S 3/8083; G01S 15/04;**
**G01S 15/86; G01S 15/876; H04R 3/005;**
G01S 15/88; G10L 2015/088; G10L 2021/02166;
H04R 1/406; H04R 2499/11

(86) International application number:
**PCT/CN2021/138534**

(87) International publication number:
**WO 2022/156438 (28.07.2022 Gazette 2022/30)**

(54) **WAKEUP METHOD AND ELECTRONIC DEVICE**

AUFWECKVERFAHREN UND ELEKTRONISCHE VORRICHTUNG

PROCÉDÉ DE RÉVEIL ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.01.2021  CN 202110075531**

(43) Date of publication of application:
**11.10.2023  Bulletin 2023/41**

(73) Proprietor: **Huawei Technologies Co., Ltd.**
**Shenzhen, Guangdong 518129 (CN)**

(72) Inventors:
• **LIU, Changfei**
**Shenzhen, Guangdong 518129 (CN)**
• **LI, Shuwei**
**Shenzhen, Guangdong 518129 (CN)**
• **SUN, Yuan**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
CN-A- 107 622 770      CN-A- 108 537 032
CN-A- 110 364 151      CN-A- 110 600 058
CN-A- 111 245 995      CN-A- 111 667 843
US-A1- 2020 090 643    US-A1- 2021 014 600

• **LEE YEONJOON YEONJOONLEE@HANYANG**
**AC KR ET AL: "Using Sonar for Liveness**
**Detection to Protect Smart Speakers against**
**Remote Attackers", PROCEEDINGS OF THE**
**ACM ON INTERACTIVE, MOBILE, WEARABLE**
**AND UBIQUITOUS TECHNOLOGIES,**
**ACMPUB27, NEW YORK, NY, USA, vol. 4, no. 1,**
**18 March 2020 (2020-03-18), pages 1 - 28,**
**XP058484946, DOI: 10.1145/3380991**
• **YONEOKA NAOKI ET AL: "Detecting**
**Surrounding Users by Reverberation Analysis**
**with a Smart Speaker and Microphone Array",**
**2019 IEEE INTERNATIONAL CONFERENCE ON**
**PERVASIVE COMPUTING AND**
**COMMUNICATIONS WORKSHOPS (PERCOM**
**WORKSHOPS), IEEE, 11 March 2019**
**(2019-03-11), pages 523 - 528, XP033558232, DOI:**
**10.1109/PERCOMW.2019.8730674**

## Description

### TECHNICAL FIELD

This application relates to the terminal field, and in particular, to a wake-up method and an electronic device.

### BACKGROUND

With the development of speech recognition technologies, a voice assistant (for example, Celia or Siri) is installed on many electronic devices to implement voice interaction with a user. Generally, one or more wake-up words (for example, "hello Celia" and "hi Siri") are preset on the electronic device. After a preset wake-up word is detected, the electronic device wakes up, and performs voice interaction with the user by using the voice assistant.

However, in practice, it is found that sometimes, even if a sound wave signal sent by the user includes the preset wake-up word, the electronic device does not wake up. Alternatively, sometimes, even if a sound wave signal sent by the user does not include the preset wake-up word, the electronic device wakes up. This brings the user a bad experience.

YEONJOON LEE AC KR ET AL.: "Using Sonar for Liveness Detection to Protect Smart Speakers against Remote Attackers", Proceedings of the ACM on interactive, mobile, wearable and ubiquitous technologies, ACMPUB27, New York, NY, USA, vol.4, no.1, 2020-03-18, pages 1-28, discloses transmitting an inaudible ultrasonic sound through a smart speaker and track the user's direction by detecting her movement using Doppler shift and compare it with the direction of a voice command received.

### SUMMARY

The present invention is set out in the appended set of claims. To resolve the foregoing technical problem, this application provides a wake-up method and an electronic device. According to technical solutions provided in this application, accuracy of waking up the electronic device can be improved, a probability of false wake-up of the electronic device can be reduced, and user experience can be improved.

### BRIEF DESCRIPTION OF DRAWINGS

FIG. 1A is a schematic diagram of a scenario of a wake-up method according to an embodiment of this application;

FIG. 1B is a schematic diagram of a sound source location positioned by a provided electronic device;

FIG. 1C is a schematic diagram of a sound source location positioned by a provided electronic device;

FIG. 2 is a schematic diagram of a hardware structure of an electronic device according to an embodiment of this application;

FIG. 3 is a schematic diagram of a principle of sound wave signal positioning in a wake-up method according to an embodiment of this application;

FIG. 4 to FIG. 7 are schematic flowcharts of sound wave signal processing in a wake-up method according to an embodiment of this application;

FIG. 8 is a part of a schematic flowchart of a wake-up method according to an embodiment of this application;

FIG. 9 is a schematic diagram of a principle of positioning an obstacle by using an ultrasonic signal in a wake-up method according to an embodiment of this application;

FIG. 10 is a schematic diagram of positioning an obstacle location by using an ultrasonic signal in a wake-up method according to an embodiment of this application;

FIG. 11 is a schematic flowchart of sound wave signal processing in a wake-up method according to an embodiment of this application;

FIG. 12 is a part of a schematic flowchart of another wake-up method according to an embodiment of this application;

FIG. 13 is a schematic diagram of a sound source location in another wake-up method according to an embodiment of this application;

FIG. 14 is a schematic diagram of sound wave signal processing in another wake-up method according to an embodiment of this application; and

FIG. 15 is a schematic diagram of a hardware structure of an electronic device according to an embodiment of this application.

## DESCRIPTION OF EMBODIMENTS

The following describes technical solutions in embodiments of this application with reference to the accompanying drawings in embodiments of this application. In the descriptions of embodiments of this application, terms used in the following embodiments are merely intended to describe purposes of specific embodiments, but are not intended to limit this application. Singular expressions: "a", "the", "the foregoing", "this", and "one" used in this specification and the appended claims of this application are also intended to include an expression such as "one or more", unless otherwise specified in the context clearly. It should be further understood that in the following embodiments of this application, "at least one" and "one or more" mean one, two, or more (including two). A term "and/or" is used to describe an association relationship between associated objects and represents that three relationships may exist. For example, A and/or B may represent the following cases: Only A exists, both A and B exist, and only B exists, where A and B each may be singular or plural. A character "/" generally indicates an "or" relationship between the associated objects.

Reference to "an embodiment", "some embodiments", or the like described in this specification indicates that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner. A term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, a word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

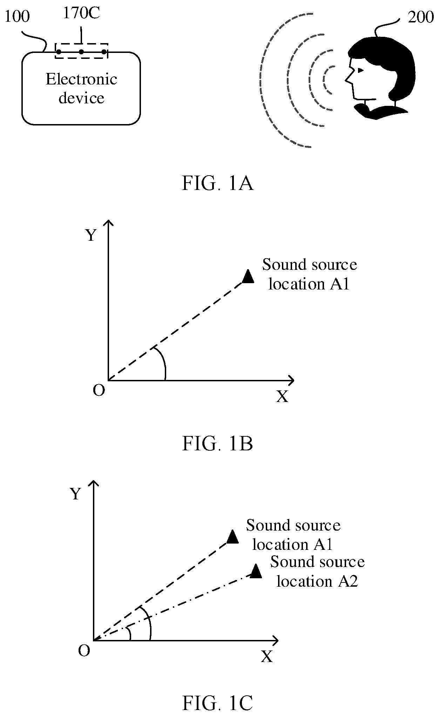

FIG. 1A is a schematic diagram of a scenario of a wake-up method according to an embodiment of this application. As shown in FIG. 1A, an electronic device 100 has a voice interaction function, and can receive a sound wave signal. Specifically, sound pickup inlets of a plurality of microphones or a microphone array 170C are provided on an upper surface of the electronic device 100. Each microphone or each microphone array corresponds to one sound pickup inlet. The plurality of microphones or the microphone array 170C receives the sound wave signal through different sound pickup inlets on the upper surface. Optionally, a speaker (not shown in the figure) may be disposed on another part (for example, a side surface) or the upper surface of the electronic device 100, and is configured to output the sound wave signal. A user 200 may wake up the electronic device 100 by using the sound wave signal, and further controls, after the electronic device 100 wakes up, the electronic device by using a voice instruction to perform a corresponding function. For example, the electronic device 100 may be a device that has a voice interaction function, such as a smart speaker, a smart television, a smart air conditioner, an intelligent door lock, or a smart lamp. This is not limited in this application.

It should be noted that the sound wave signal includes a voice signal (a signal whose frequency is 20 Hz to 20000 Hz). Optionally, the sound wave signal further includes an ultrasonic signal (a signal whose frequency is greater than 20000 Hz). Optionally, the sound wave signal may further include an infrasound wave signal (a signal whose frequency is lower than 20 Hz). The sound wave signal sent by the user refers to a voice signal sent by the user.

It should be noted that a plurality of sound pickup inlets of the plurality of microphones or the microphone array 170C in FIG. 1A are provided on the upper surface of the electronic device 100. This is merely an example. The plurality of sound pickup inlets may alternatively be provided on another surface. In use of the electronic device 100, the upper surface or the another surface is at or close to a horizontal plane. The another surface close to the horizontal plane means that although the another surface is uneven and there are specific concave and convex, the another surface may approximately be considered as the horizontal plane because a concave and convex influence is small. For ease of description, an example in which the plurality of microphones or the microphone array 170C are/is disposed on the upper surface of the electronic device 100 is used below for description.

In practice, it is found that sometimes, even if the sound wave signal sent by the user 200 includes a preset wake-up word, the electronic device 100 does not wake up. Alternatively, sometimes, even if the sound wave signal sent by the user 200 does not include a preset wake-up word, the electronic device 100 wakes up. This disturbs the user and brings the user a bad experience.

To resolve the foregoing technical problem, the inventor concludes, after long-term and in-depth research, experiment and analysis, that there are two main reasons for the foregoing error. Before the two reasons are described, a voice interaction process on an electronic device side and a process of positioning a sound source location by the electronic device based on a detected sound wave signal are first described.

It should be noted that, because the sound pickup inlets of the plurality of microphones or the microphone array 170C are provided on the upper surface of the electronic device 100, the electronic device 100 cannot identify a three-dimensional location of the sound source location, and can identify only a location corresponding to a projection of the sound source location on a plane on which the upper surface is located, that is, a two-dimensional location. The following provides specific descriptions with reference to FIG. 1B. FIG. 1B is a schematic diagram of a sound source location positioned by the electronic device 100. As shown in FIG. 1B, an upper surface of the electronic device 100 is an XY-axis plane, and a central point of the upper surface is a point O. The electronic device 100 can identify only a sound source location A1 (X1, Y1) based on a received sound wave signal, but cannot identify a height of the sound source location. Therefore, a concept of the sound source location in the following is essentially a projection of the sound source location on the upper surface of the electronic device 100. That the point O is the central point of the upper surface is merely an example. Actually, any fixed point on the upper surface may be the point O.

Generally, a voice interaction process on an electronic device side may be divided into five steps: wake-up, response, input, understanding, and feedback. For example, the voice interaction function may be specifically implemented by a voice assistant installed in the electronic device 100. With reference to FIG. 1A, the five steps are further described. As shown in FIG. 1A, the electronic device 100 is in a state (for example, a standby state) before waking up. The user 200 outputs a sound wave signal including a preset wake-up word. After receiving the sound wave signal, the electronic device 100 identifies whether the sound wave signal includes the preset wake-up word. If the preset wake-up word is identified from the sound wave signal, the electronic device 100 invokes a voice interaction assistant, or activates the voice interaction function of the electronic device 100, and the electronic device 100 wakes up, and enters an operation state. Optionally, the electronic device 100 may further respond to the sound wave signal sent by the user. In this way, the electronic device 100 switches from a first state (for example, the standby state) to a second state (for example, the operation state). Then, the user 200 may send a further voice instruction. After receiving the further voice instruction, the electronic device 100 may identify corresponding semantic content by using a speech recognition algorithm, that is, understand the further voice instruction, to perform a corresponding function. To respond to the sound wave signal in time, a sound pickup apparatus of the electronic device 100 usually needs to be always on (always on). For example, the sound pickup apparatus of the electronic device 100 may be a microphone array or a plurality of microphones. The electronic device 100 may detect the sound wave signal in real time by using the microphone array or the plurality of microphones.

To implement accurate wake-up and a quick response to a voice sent by the user, the electronic device 100 identifies, based on the detected sound wave signal, a sound source location corresponding to the sound wave signal, obtains a direction (which may be referred to as a sound pickup direction) from the sound source location, and further obtains a component of the sound wave signal in the sound pickup direction. Processing is performed based on the component. This can reduce an amount of data to be processed, and improve a response speed.

Specifically, as shown in FIG. 1B, after detecting the sound wave signal, the electronic device 100 may position the sound source location A1 corresponding to the sound wave signal, to obtain the sound source location A1 on which the sound wave signal is located. Further, the electronic device 100 may use a direction from the sound source location A1 as a sound pickup direction, and obtain a sound wave signal component in the sound pickup direction based on the sound pickup direction. Subsequently, the electronic device 100 may input the obtained sound wave signal component into a wake-up word model. In the wake-up word model, a sound wave feature of the sound wave signal component is extracted by using a preset algorithm, and a similarity (also referred to as a confidence degree) between the sound wave feature and a sound wave feature corresponding to the preset wake-up word is compared. If the similarity is greater than a preset threshold, the electronic device 100 may determine that the detected sound wave signal includes the preset wake-up word. In this case, the electronic device 100 wakes up, and enters the operation state. If the similarity is less than the preset threshold, the electronic device 100 may determine that the detected sound wave signal does not include the preset wake-up word. In this case, the electronic device 100 may continue to keep a state (for example, the standby state) before waking up.

However, the inventor finds that a sound source location positioned by the electronic device 100 based on a detected sound wave signal generally has a deviation. FIG. 1C is a schematic diagram of a sound source location positioned by a provided electronic device 100. As shown in FIG. 1C, a sound source location positioned by the electronic device 100 based on a detected sound wave signal is a sound source location A1, but actually the user 200 sends the sound wave signal at a sound source location A2. Thus, there is a deviation. Such a deviation affects a series of subsequent processing performed by the electronic device 100, resulting in an inaccurate processing result and a large error.

After long-term in-depth research, experiment and analysis, the inventor concludes that a positioning deviation of the foregoing sound source location mainly has two reasons:

1. A time of arrival (time of arrival, TOA) algorithm or a time difference of arrival (time difference of arrival, TDOA) algorithm used by the electronic device 100 in sound source location positioning is not accurate enough. Therefore, a calculated sound source location has a deviation.

2. Generally, a noise source exists in an environment in which the electronic device 100 and the user 200 are located, and noise from the noise source also causes a positioning deviation of the sound source location. Although the electronic device 100 may filter out some noise signals by using a noise reduction algorithm, a residual noise signal still affects a sound source location positioning result of the electronic device 100. As a result, the sound source location A1 positioned by the electronic device 100 deviates from the sound source location A2 in which the user 200 is actually located.

When the sound source location A1 positioned by the electronic device 100 deviates from the sound source location A2 in which the user 200 is actually located, if the electronic device 100 uses a direction from the sound source location A1 as a sound pickup direction to further extract a sound wave signal component of the sound wave signal in the sound pickup direction, the sound wave signal input by the user cannot be accurately reflected. Subsequently, accuracy of identifying a wake-up word by the electronic device 100 is reduced, and user experience is poor.

To improve accuracy of waking up the electronic device, reduce a probability of false wake-up of the electronic device, and improve user experience, this application provides a wake-up method and an electronic device. The wake-up method provided in this embodiment of this application is applied to the electronic device. The electronic device may include various smart household devices such as a smart speaker, a smart television, a smart air conditioner, a smart refrigerator, a smart lamp, a smart door, a smart lock, and a smart curtain; various wearable electronic devices such as a smartphone, smart glasses, a smart watch, and a smart band; and electronic devices with a voice interaction function, such as a tablet, a laptop, a personal digital assistant (personal digital assistant, PDA), a vehicle-mounted device, a virtual reality device, and an augmented reality device. This is not limited in this application.

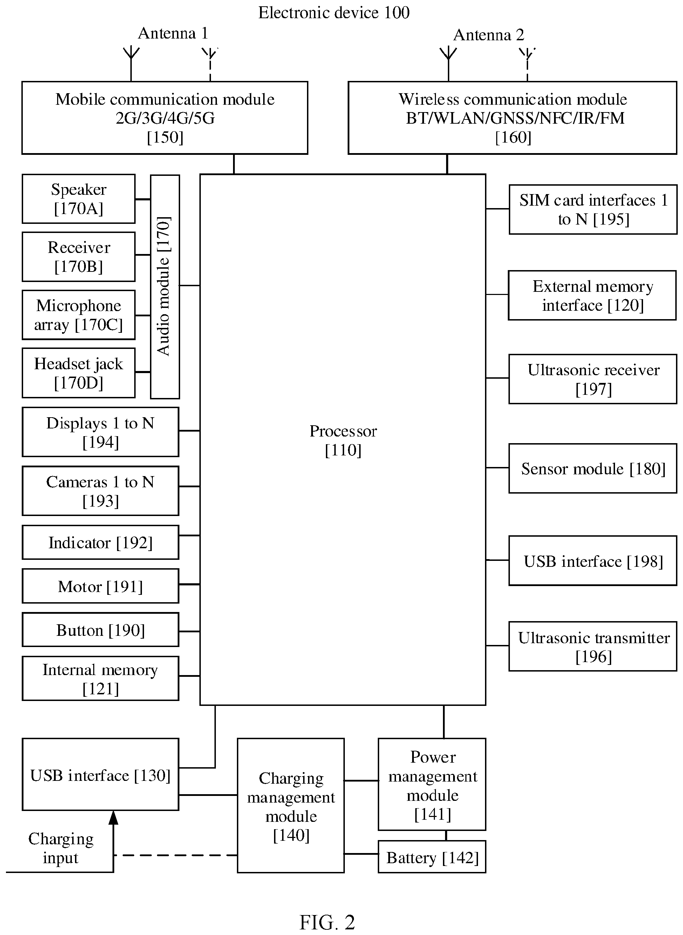

For example, FIG. 2 shows a hardware structure of the electronic device 100 according to an embodiment of this application. As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone array 170C, a headset jack 170D, a sensor module 180, a button 190, a motor 191, an indicator 192, a camera 193, a display 194, a subscriber identity module (subscriber identity module, SIM) card interface 195, an ultrasonic transmitter 196, an ultrasonic receiver 197, a USB interface 198, and the like.

It may be understood that the structure shown in this embodiment of this application does not constitute a specific limitation on the electronic device 100. In some other embodiments of this application, the electronic device 100 may include more or fewer components than those shown in FIG. 2, or combine some components, or split some components, or have different component arrangements. The components shown in FIG. 2 may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input of the battery 142 and/or an input of the charging management module 140, to supply power to the processor 110, the internal memory 121, the external memory interface 120, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the wireless communication module 160, and the like.

The mobile communication module 150 may provide a solution that includes wireless communication such as 2G/3G/4G/5G and that is applied to the electronic device. The mobile communication module 150 may include one or more filters, one or more switches, one or more power amplifiers, one or more low noise amplifiers (low noise amplifiers, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrated with one or more communication processing modules. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The external memory interface 120 may be configured to connect to an external storage card, for example, a micro SD card, to extend a storage capability of the electronic device. The external storage card communicates with the processor 110 through the external memory interface 120, to implement a data storage function. For example, files such as music and videos are stored in the external storage card.

The internal memory 121 may be configured to store one or more computer programs, and the one or more computer programs include instructions. The processor 110 may run the instructions stored in the internal memory 121, so that the electronic device performs the wake-up method, various functional applications, data processing, and the like provided in some embodiments of this application. The internal memory 121 may include a program storage area and a data storage area. The program storage area may store an operating system. The program storage area may further store one or more applications (for example, Gallery and Contacts), and the like. The data storage area may store data (for example, photos and contacts) created during use of the electronic device. In addition, the internal memory 121 may include a high-speed random access memory, and may further include a nonvolatile memory, such as one or more disk storage components, a flash component, or a universal flash storage (universal flash storage, UFS). In some other embodiments, the processor 110 runs the instructions stored in the internal memory 121 and/or the instructions stored in the memory disposed in the processor, so that the electronic device performs the method, various functional applications, and data processing provided in embodiments of this application.

The electronic device may implement an audio function, for example, playing music, and recording, by using the audio module 170, the speaker 170A, the receiver 170B, the microphone array 170C, the headset jack 170D, the application processor, and the like.

The audio module 170 is configured to convert digital audio information into an analog sound wave signal for output, and is also configured to convert an analog audio input into a digital sound wave signal. The audio module 170 may be further configured to code and decode a sound wave signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound wave signal. The electronic device may listen to music or answer a hands-free call through the speaker 170A.

The microphone array 170C includes a plurality of microphones. The microphone may also be referred to as a "mike" or a "mic", and is configured to convert a sound wave signal into an electrical signal. When making a call or sending a voice message, the user may make a sound near the microphone by using a mouth of the user, to input a sound wave signal into the microphone. In some embodiments, the electronic device may collect a sound wave signal by using the microphone array 170C, and further identify a sound source based on the sound wave signal collected by each microphone in the microphone array 170C, to implement functions such as sound source positioning and directional recording. One or more microphone arrays 170C may be disposed in the electronic device. In another implementation, the microphone array 170C may be replaced with a plurality of microphones. That is, the electronic device 100 does not include the microphone array 170C, but includes the plurality of microphones. Sound pickup inlets of the plurality of microphones are provided on a same surface, such as an upper surface of the electronic device 100.

The sensor 180 may include a pressure sensor, a gyro sensor, a barometric pressure sensor, a magnetic sensor, an acceleration sensor, a distance sensor, a proximity sensor, a fingerprint sensor, a temperature sensor, a touch sensor, an ambient light sensor, a bone conduction sensor, or the like. This is not limited in this embodiment of this application.

The ultrasonic transmitter 196 and the ultrasonic receiver 197 are respectively configured to transmit an ultrasonic signal and receive an ultrasonic signal. The ultrasonic transmitter 196 and the ultrasonic receiver 197 each may be one or more. This is not limited in this application. A person skilled in the art may perform setting on this based on actual experience or an actual application scenario. The ultrasonic signal is a sound wave signal whose frequency is higher than 20000 Hz (hertz). The ultrasonic signal has characteristics of good directionality, strong reflection and penetration, and the like.

For example, the ultrasonic transmitter 196 may be specifically a plurality of speakers 196A (not shown in FIG. 2), that is, the speakers 196A have a function of transmitting the ultrasonic signal. For example, the ultrasonic receiver 197 may be specifically the microphone array 197A (not shown in FIG. 2) or a plurality of microphones 197B (not shown in FIG. 2), that is, the microphone array 197A and the plurality of microphones 197B have a function of receiving the ultrasonic signal.

In some embodiments, the electronic device 100 does not include the ultrasonic transmitter 196. Functions of the ultrasonic transmitter 196 are integrated in the speaker 170A. To be specific, the speaker 170A can transmit both a sound wave signal that can be sensed by a human ear and an ultrasonic signal. In this way, no additional ultrasonic transmitter 196 needs to be disposed in the electronic device.

In some embodiments, similarly, the electronic device 100 does not include the ultrasonic receiver 197. Functions of the ultrasonic receiver 197 are integrated in the microphone array 170C. To be specific, the microphone array 170C can receive both a sound wave signal that can be sensed by a human ear and an ultrasonic signal. In this way, no additional ultrasonic receiver 197 needs to be disposed in the electronic device.

In some embodiments, the electronic device 100 does not include the ultrasonic transmitter 196, and does not include the ultrasonic receiver 197. The functions of the ultrasonic transmitter 196 are integrated in the speaker 170A, and the functions of the ultrasonic receiver 197 are integrated in the microphone array 170C.

The USB interface 198 may be configured to connect to another device. For example, the USB interface 198 may be one or more USB interfaces.

It should be noted that, when the electronic device 100 includes the ultrasonic transmitter 196 and the plurality of microphones or the microphone array 170C, and the ultrasonic transmitter 196 and the plurality of microphones or the microphone array 170C are not integrated, a plane on which a top of the ultrasonic transmitter 196 is located is parallel to or approximately parallel to a plane on which sound pickup inlets of the plurality of microphones or the microphone array 170C are provided. "Approximately parallel" means that two planes are not parallel, but can be considered as parallel planes because an angle difference is small.

Optionally, when the electronic device 100 is a smart speaker, the electronic device 100 may further include one or more components such as a GPU, a display, and a button. This embodiment of this application does not impose any limitation on this.

Optionally, when the electronic device 100 is a smart television, the electronic device 100 may further include one or more components such as a GPU and a display. In addition, one or more components such as a remote control and an infrared sensor are provided for the electronic device. This embodiment of this application does not impose any limitation on this.

Optionally, when the electronic device 100 is a smartphone, the electronic device 100 may further include one or more components such as a GPU, a display, a headset jack, a button, a battery, a motor, an indicator, and a SIM card interface. This embodiment of this application does not impose any limitation on this.

In this embodiment of this application, when detecting whether a received sound wave signal includes a wake-up word, the electronic device 100 may introduce an ultrasonic signal to detect a sound source location of the user, to improve detection precision of the sound source location.

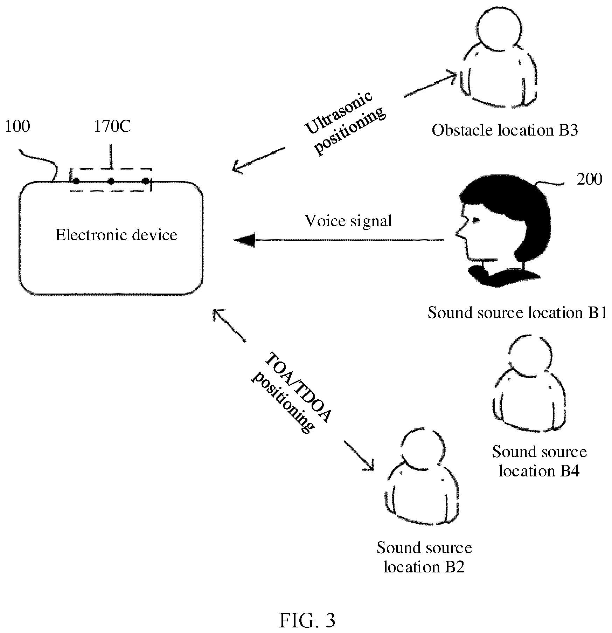

FIG. 3 is a schematic diagram of a principle of sound wave signal positioning in a wake-up method according to an embodiment of this application.

As shown in FIG. 3, the user 200 sends a sound wave signal at a sound source location B1. The electronic device 100 performs positioning by using the TOA algorithm or the TDOA algorithm based on the received sound wave signal (the received sound wave signal includes, but is not limited to the sound wave signal sent by the user 200), to obtain a sound source location B2. In addition, after receiving the sound wave signal, the electronic device 100 may further position the user by using an ultrasonic positioning method, to obtain an obstacle location B3. Further, the electronic device 100 finally determines a sound source location B4 (the sound source location B4 may be the same as or different from the sound source location B2 or the obstacle location B3) of the user based on two positioning results (that is, the sound source location B2 and the obstacle location B3). In this way, the electronic device 100 may correct the sound source location B2 based on the obstacle location B3, so that the sound source location B4 determined by the electronic device 100 is closer to the sound source location B1 in which the user is actually located.

In this way, the electronic device may subsequently use a direction from the sound source location B4 as a sound pickup direction, and identify whether the detected sound wave signal includes a wake-up word. Because a deviation between the sound source location B4 determined by the electronic device and the sound source location B1 actually corresponding to the user is small, accuracy of determining, by the electronic device based on a sound wave signal component in a direction of the sound source location B4, whether the wake-up word is included is higher. This improves accuracy of waking up the electronic device, reduces a probability of false wake-up of the electronic device, and improves user experience.

For example, the electronic device 100 may include N (N is a positive integer greater than 1) speakers and L (L is a positive integer greater than or equal to 1) microphone arrays. Each microphone array includes M (M is a positive integer greater than 1) microphones. The N speakers and the L microphone arrays are disposed in different locations of the electronic device 100. A distance between any two of the N speakers and a distance between any two of the M microphones are fixed (equal or unequal, but fixed). Sound pickup inlets of the M microphones or sound pickup inlets of the L microphone arrays are provided on a same surface such as an upper surface of the electronic device 100.

Alternatively, the electronic device 100 may include N (N is a positive integer greater than 1) speakers and M (M is a positive integer greater than 1) microphones. The N speakers and the M microphones are disposed in different locations of the electronic device 100. A distance between any two of the N speakers and a distance between any two of the M microphones are fixed. Sound pickup inlets of the M microphones are provided on a same surface such as an upper surface of the electronic device 100.

For ease of description, the following uses M microphones located in one microphone array as an example for description. A person skilled in the art should understand that independent M microphones that are not located in one microphone array fall within the protection scope of this application.

Each of the N speakers may be used as an ultrasonic transmitter to transmit an ultrasonic signal (a sound wave signal higher than 20000 Hz). In addition, each of the N speakers may further play a sound wave signal (a sound wave signal of 20 Hz to 20000 Hz) that can be sensed by a human ear. Each of the M microphones may be used as an ultrasonic receiver to receive an ultrasonic signal. In addition, each of the M microphones may further collect a sound wave signal that can be sensed by a human ear. In this way, the electronic device 100 may implement ultrasonic positioning by using the speaker and the microphone, and no additional ultrasonic transmitter and ultrasonic receiver need to be added. This reduces costs of performing ultrasonic positioning in a voice interaction scenario.

Alternatively, each of the N speakers may play only a sound wave signal (a sound wave signal of 20 Hz to 20000 Hz) that can be sensed by a human ear. Each of the M microphones can collect only a sound wave signal that can be sensed by a human ear. P ultrasonic transmitters and Q ultrasonic receivers are additionally disposed in the electronic device 100. P is a positive integer greater than or equal to 1, and Q is a positive integer greater than 1. A distance between any two of the Q ultrasonic receivers is fixed. When P is a positive integer greater than 1, a distance between any two of the P ultrasonic transmitters is fixed.

In some embodiments, the electronic device 100 may set the M microphones in the microphone array to an always on state, to collect sound wave signals in real time by using the M microphones. In this case, if an ultrasonic signal exists in an environment in which the electronic device 100 is located, the ultrasonic signal serving as a high-frequency sound wave signal may also be collected by each microphone. When only sound wave signals need to be used, each microphone may input the collected sound wave signals into a corresponding low-pass filter, to filter out the ultrasonic signal greater than 20000 Hz in the sound wave signals. In this way, the electronic device may obtain a sound wave signal component in a sound pickup direction based on the filtered sound wave signals and the sound pickup direction from a sound source location, to determine whether the sound wave signal component in the sound pickup direction includes a preset wake-up word. When only the ultrasonic signal needs to be used, each microphone may input the collected sound wave signals into a corresponding high-pass filter, to filter out a signal less than 20000 Hz in the sound wave signals. Further, the electronic device may perform ultrasonic positioning based on the filtered sound wave signals, to position the obstacle location B3.

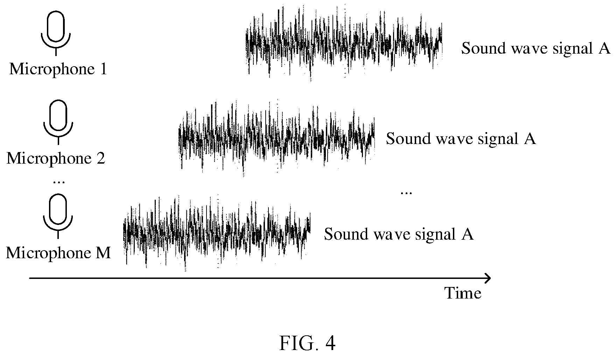

For example, FIG. 4 to FIG. 7 are schematic flowcharts of sound wave signal processing in a wake-up method according to an embodiment of this application. As shown in FIG. 4, M microphones in a microphone array collect sound wave signals A (assuming that the sound wave signals A do not include an ultrasonic signal, even if the sound wave signals A include an ultrasonic signal, the ultrasonic signal can be filtered by a low-pass filter). Locations of the M microphones are different, waveforms of sound wave signals A collected by different microphones in the M microphones may be different (the difference is small or even no difference), and time points of the sound wave signals A collected by different microphones may also be different. Therefore, as shown in FIG. 4, the electronic device 100 may obtain corresponding M sound wave signals A by using the M microphones.

After obtaining the M sound wave signals A, the electronic device 100 may further position a sound source location based on the M sound wave signals A. For example, because each of the M sound wave signals A arrives at a corresponding microphone at a different time point, the electronic device may calculate a corresponding sound source location B2 based on the foregoing time point by using the TOA algorithm or TDOA algorithm.

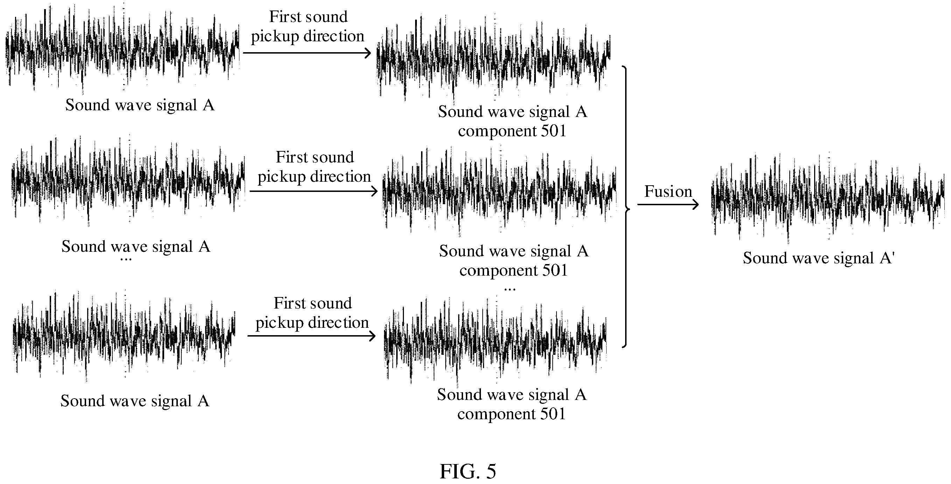

As shown in FIG. 5, after calculating the sound source location B2, the electronic device 100 may determine a direction from the sound source location B2 as a first sound pickup direction. Time alignment is performed on each of the M sound wave signals A (that is, start time points of sound wave signals A are aligned). After the time alignment is performed, a component of each of the M sound wave signals A in the first sound pickup direction is obtained, that is, M sound wave signal A components 501 are obtained. The M sound wave signal A components 501 are fused into one sound wave signal, that is, a sound wave signal A'.

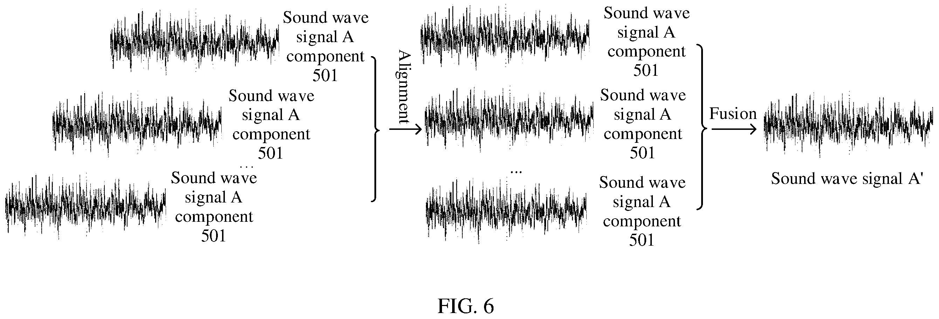

In addition, as shown in FIG. 6, after calculating the sound source location B2, the electronic device 100 may determine a direction from the sound source location B2 as a first sound pickup direction. A component of each of the M sound wave signals A in the first sound pickup direction is obtained, that is, M sound wave signal A components 501 are obtained. Then, time alignment is performed (that is, start time points of sound wave signals A are aligned). After the time alignment, the M sound wave signal A components 501 are fused into one sound wave signal, that is, a sound wave signal A'.

The fusion may mean that the M sound wave signal A components 501 are directly superimposed, or the M sound wave signal A components 501 may be weighted and averaged, or the fusion may be in another manner. This is not limited in this application.

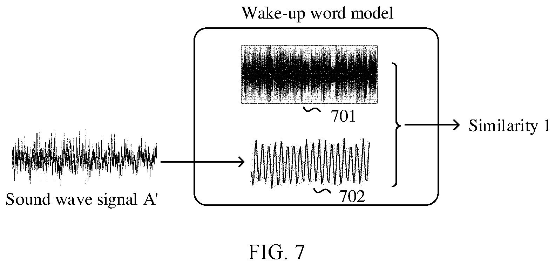

As shown in FIG. 7, after obtaining the sound wave signal A', the electronic device 100 may input the sound wave signal A' into a preset wake-up word model. The wake-up word model stores a sound wave feature 701 of a preset wake-up word. Then, in the wake-up word model, a sound wave feature 702 of the sound wave signal A' is extracted by using a preset algorithm, and the extracted sound wave feature 702 is compared with the sound wave feature 701 corresponding to the preset wake-up word, to obtain a similarity (also referred to as a confidence degree) between the sound wave feature 702 and the sound wave feature 701. Finally, the obtained similarity between the sound wave feature 702 and the sound wave feature 701 is a similarity 1 (which may also be referred to as a first similarity). The sound wave feature 702 and the sound wave feature 701 may be represented by using a related code, a function, a matrix, or a spectrum diagram. This is not limited in this application.

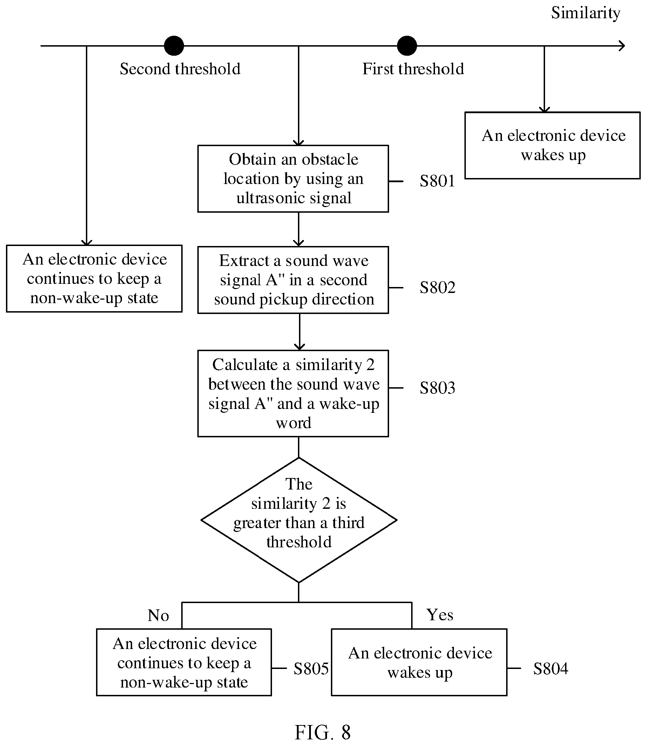

FIG. 8 is a part of a schematic flowchart of a wake-up method according to an embodiment of this application. As shown in FIG. 8, after the similarity 1 is obtained based on the processing procedures shown in FIG. 4 to FIG. 7, if the similarity 1 is greater than a first threshold (for example, 90%, or 90 points), it indicates that the sound wave signals A detected by the electronic device 100 are close to the preset wake-up word. In this case, the electronic device 100 may determine that the sound wave signals A include the preset wake-up word. Further, the electronic device 100 wakes up. For example, the electronic device 100 invokes a voice assistant, and the voice assistant performs voice interaction with a user.

If the similarity 1 is less than a second threshold (for example, 60%, or 60 points), it indicates that the sound wave signals A detected by the electronic device 100 greatly differ from the preset wake-up word, and the electronic device 100 may determine that the sound wave signals A do not include the preset wake-up word. Further, the electronic device 100 continues to keep a non-wake-up state. The second threshold is less than the first threshold. In addition, both the second threshold and the first threshold may be adjusted, and are not limited to the foregoing example threshold.

If the similarity 1 is between the second threshold and the first threshold, it indicates that the sound wave signals A detected by the electronic device 100 may include the preset wake-up word, and the electronic device 100 may further determine, according to S801 to S805 and through ultrasonic positioning, whether the sound wave signals A include the preset wake-up word, to further determine whether the electronic device 100 wakes up.

S801: The electronic device 100 obtains an obstacle location based on duration between transmission and reception of an ultrasonic signal, a transmission speed of an ultrasonic wave in the air, and even a sound source location obtained by using the TOA algorithm or TDOA algorithm.

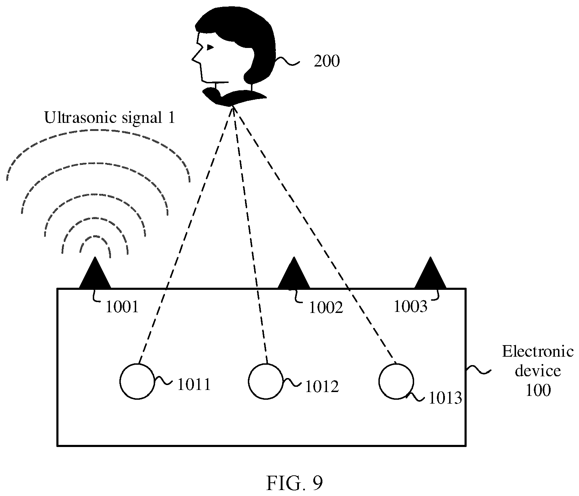

Before S801 is specifically described, a principle of ultrasonic positioning is first described. FIG. 9 is a schematic diagram of a principle of positioning an obstacle by using an ultrasonic signal in a wake-up method according to an embodiment of this application. P ultrasonic transmitters and Q ultrasonic receivers are disposed in the electronic device 100. The P ultrasonic transmitters and the Q ultrasonic receivers face different directions on the electronic device 100. That is, the P ultrasonic transmitters transmit ultrasonic waves in a K direction, and the Q ultrasonic receivers are not located in the K direction of the P ultrasonic transmitters. That is, the Q ultrasonic receivers cannot receive the ultrasonic signals directly transmitted by the P ultrasonic transmitters, but can receive only ultrasonic signals that are obtained by reflecting, by an obstacle, the ultrasonic signals transmitted by the P ultrasonic transmitters. P is a positive integer greater than or equal to 1, and Q is a positive integer greater than 1.

As shown in FIG. 9, for example, the P ultrasonic transmitters include a speaker 1001, a speaker 1002, and a speaker 1003, and Q microphones include a microphone 1011, a microphone 1012, and a microphone 1013. The speaker 1001 may transmit an ultrasonic signal 1 within a specific angle range. Similarly, the speaker 1002 may transmit an ultrasonic signal 2 (not shown in FIG. 9) within a specific angle range, and the speaker 1003 may transmit an ultrasonic signal 3 (not shown in FIG. 9) within a specific angle range. The ultrasonic signal 1, the ultrasonic signal 2, and the ultrasonic signal 3 are reflected upon encountering an obstacle including the user 200. The microphone 1011, the microphone 1012, and the microphone 1013 may collect the reflected ultrasonic signal 1, the reflected ultrasonic signal 2, and the reflected ultrasonic signal 3.

The ultrasonic signal 1 is used as an example. After passing through the obstacle including the user 200, the ultrasonic signal 1 is reflected, and the reflected ultrasonic signal 1 arrives at the microphone 1011, the microphone 1012, and the microphone 1013 for different duration and time points. The electronic device 100 obtains an obstacle location based on duration between transmission and reception of the ultrasonic signal 1, and a transmission speed of an ultrasonic wave in the air. Certainly, the obstacle location obtained in this manner also has a specific deviation.

For example, if an obstacle around the electronic device 100 is only the user 200, an obtained obstacle location may be the obstacle location B3 shown in FIG. 3.

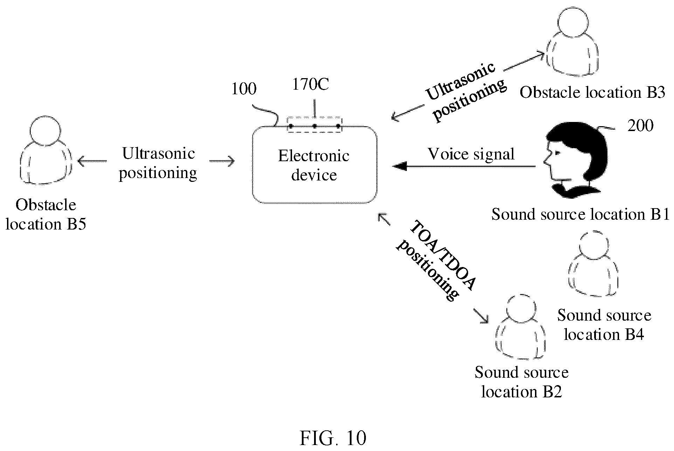

For example, if there are many obstacles around the electronic device 100, including but not limited to the user 200, obstacle locations that greatly differ from the sound source location B2 may be excluded based on the previously obtained sound source location B2, and an obstacle location whose difference from the sound source location B2 is within a specific range is reserved. FIG. 10 is a schematic diagram of positioning an obstacle location by using an ultrasonic signal in a wake-up method according to an embodiment of this application. As shown in FIG. 10, two obstacle locations are obtained through ultrasonic positioning, which are respectively an obstacle location B3 and an obstacle location B5. Since the obstacle location B5 greatly differs from the sound source location B2, and a difference is beyond the foregoing specific range, the obstacle location B5 is excluded. Since the obstacle location B3 whose difference from the sound source location B2 is within the foregoing specific range, the obstacle location B3 is reserved. According to the foregoing manner, there may be one or more reserved obstacle locations.

For example, the reserved obstacle location may be recorded as a positioning result 1.

For example, when there are a plurality of reserved obstacle locations, the plurality of reserved obstacle locations may be superimposed and averaged, to obtain one obstacle location.

For example, the foregoing specific range may be a range that differs by a specific angle from a direction from the sound source location B2. The specific angle may be a preset angle.

Alternatively, the ultrasonic signal 2 may be transmitted independently. Further, in the foregoing manner, a positioning result 2 obtained based on transmission and reflection of the ultrasonic signal 2 may also be obtained. The positioning result 2 may include one or more obstacle locations.

Alternatively, the ultrasonic signal 3 may be transmitted independently. Further, in the foregoing manner, a positioning result 3 obtained based on transmission and reflection of the ultrasonic signal 3 may also be obtained. The positioning result 3 may include one or more obstacle locations.

Then, the electronic device 100 may perform cluster analysis on the positioning result 1, the positioning result 2, and the positioning result 3 by using a preset clustering algorithm. For example, the clustering algorithm may include a K-means clustering algorithm (k-means clustering algorithm, also referred to as k-means clustering algorithm), a self-organizing map (self-organizing map, SOM) neural network clustering algorithm, or the like. The electronic device 100 may aggregate, through cluster analysis, obstacle locations with high similarities in a plurality of positioning results into one obstacle location (for example, the obstacle location B3 in FIG. 3). In this case, the electronic device 100 may determine the aggregated obstacle location as a usable obstacle location.

Optionally, the electronic device 100 may use only an obstacle location determined by using the ultrasonic signal 1.

It should be noted that a sound wave signal collected by each microphone may include an ultrasonic signal, or may include a sound wave signal that can be recognized by a human ear. In S801, microphones may first input collected sound wave signals into a corresponding high-pass filter, and filter out a sound wave signal less than 20000 Hz in the sound wave signals to obtain a corresponding ultrasonic signal. Further, the electronic device 100 may determine an obstacle location according to the foregoing method.

S802: The electronic device 100 uses a direction from the obstacle location as a second sound pickup direction, and obtains a sound wave signal A component of the sound wave signal A in the second sound pickup direction, that is, a sound wave signal A".

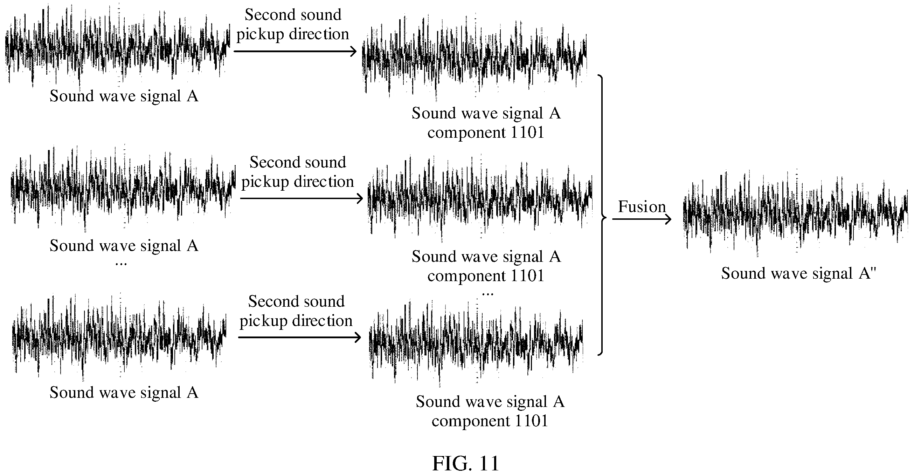

S802 may be further described with reference to FIG. 11. FIG. 11 is a schematic flowchart of sound wave signal processing in a wake-up method according to an embodiment of this application. As shown in FIG. 11, the electronic device 100 may use the direction from the obstacle location as the second sound pickup direction. After M sound wave signals A collected by the electronic device 100 are aligned in time, components of the M sound wave signals A in the second sound pickup directions are extracted, and M sound wave signal A components 1101 are obtained. Then, the electronic device 100 may fuse the M sound wave signal A components 1101 to obtain the sound wave signal A". Certainly, similar to that shown in FIG. 6, the components of the M sound wave signals A in the second sound pickup directions may be first extracted, and then be fused after time alignment. A specific process is not described again.

S803: The electronic device 100 may input the sound wave signal A" into a preset wake-up word model, and calculate a similarity 2 (also referred to as a second similarity) between the sound wave signal A" and the wake-up word.

A process of calculating the similarity 2 is similar to that of calculating the similarity 1. Details are not described herein.

If the similarity 2 is greater than a third threshold, it indicates that the component, namely, the sound wave signal A", of the sound wave signal A in the second sound pickup direction is close to the preset wake-up word, and the electronic device 100 may determine that the sound wave signal A includes the preset wake-up word. In this case, the electronic device 100 may perform step S804. The third threshold may be greater than the first threshold, or may be less than the first threshold. For example, the third threshold may be 95% or 95 points, 80% or 80 points, or the like.

If the similarity 2 is less than the third threshold, it indicates that the component, namely, the sound wave signal A", of the sound wave signal A in the second sound pickup direction greatly differs from the preset wake-up word, and the electronic device 100 may determine that the sound wave signal A does not include the preset wake-up word. In this case, the electronic device 100 may perform step S805.

S804: The electronic device 100 wakes up.

For example, the electronic device 100 may invoke a voice assistant, or activate a function of the voice assistant.

S805: The electronic device 100 keeps a non-wake-up state.

For example, the electronic device 100 continues to keep the non-wake-up state (for example, a standby state).

It can be learned that the wake-up method provided in this application may be divided into two phases. In a first phase, the electronic device may first identify a similarity 1 between the detected sound wave signal and the preset wake-up word based on a sound wake-up procedure. When the similarity 1 is greater than the first threshold, the electronic device wakes up. When the similarity 1 is less than the second threshold, the electronic device continues to keep the non-wake-up state. When the similarity 1 is between the first threshold and the second threshold, the wake-up method may enter a second phase.

In the second phase, the electronic device may position an obstacle location by using an ultrasonic signal, and select and calculate the obstacle location based on a sound source location identified in the first phase, to finally obtain an obstacle location. The electronic device calculates a similarity 2 between a sound wave signal component in a direction from the obstacle location and the preset wake-up word. After the similarity 2 meets a corresponding threshold condition, the electronic device wakes up. Otherwise, the electronic device continues to keep the non-wake-up state.

It should be noted that a person skilled in the art may set the third threshold based on actual experience or an actual application scenario. For example, when the first threshold is set to a high value, the third threshold may be set to a value less than the first threshold. For example, the first threshold may be set to 95, and the third threshold may be set to a value less than 95 (for example, 70 or 80). In other words, the electronic device determines that the sound wave signal includes the preset wake-up word only after it is detected in the first phase that the similarity 1 is greater than the first threshold (for example, 95). Otherwise, the second phase is entered, and the electronic device calculates the similarity 2 through ultrasonic positioning. When the similarity 2 is greater than the third threshold (for example, 70 or 80), the electronic device wakes up.

Alternatively, when the first threshold is set to a low value, the third threshold may be set to a value greater than the first threshold. For example, the first threshold may be set to 75, and the third threshold may be set to a value greater than 75 (for example, 85 or 95). In other words, the second phase is entered after it is detected that the similarity 1 is less than the first threshold (for example, 75) in the first phase. The electronic device calculates the similarity 2 through ultrasonic positioning. When the similarity 2 is greater than the third threshold (for example, 70 or 80), the electronic device wakes up.

In addition, this application further provides an embodiment of another wake-up method. Compared with the wake-up method described above, the another wake-up method includes a same first phase, but a second phase is different. Content of the first phase is not described herein again.

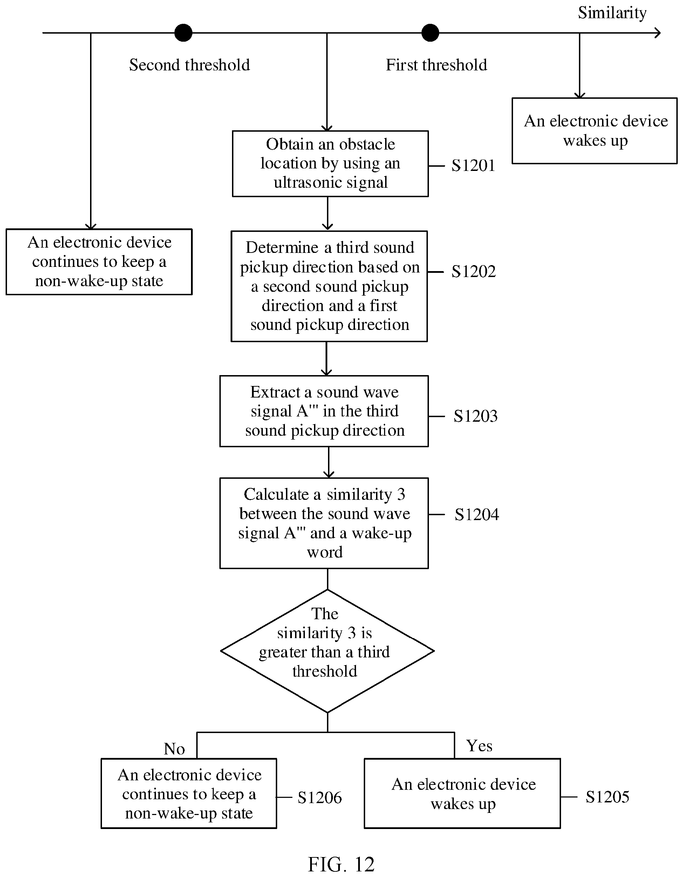

Content of the second phase in the another wake-up method is described with reference to FIG. 12. FIG. 12 is a part of a schematic flowchart of another wake-up method according to an embodiment of this application. As shown in FIG. 12, after the similarity 1 is obtained based on the processing procedures shown in FIG. 4 to FIG. 7, a second sound pickup direction is determined through ultrasonic positioning, and a third sound pickup direction is further determined based on a first sound pickup direction and the second sound pickup direction. Then, a component of the sound wave signal A in the third sound pickup direction, that is, a sound wave signal A''', is obtained, and further, it is determined whether the sound wave signal A''' includes a preset wake-up word, to determine whether the electronic device 100 wakes up.

Specifically, after the similarity 1 is obtained based on the processing procedures shown in FIG. 4 to FIG. 7, if the similarity 1 is greater than a first threshold (for example, 90%, or 90 points), it indicates that the sound wave signal A detected by the electronic device 100 is close to the preset wake-up word. In this case, the electronic device 100 may determine that the sound wave signal A includes the preset wake-up word. Further, the electronic device 100 wakes up. For example, the electronic device 100 invokes a voice assistant, and the voice assistant performs voice interaction with a user.

If the similarity 1 is less than a second threshold (for example, 60%, or 60 points), it indicates that the sound wave signal A detected by the electronic device 100 greatly differs from the preset wake-up word, and the electronic device 100 may determine that the sound wave signal A does not include the preset wake-up word. Further, the electronic device 100 continues to keep a non-wake up state. The second threshold is less than the first threshold. In addition, both the second threshold and the first threshold may be adjusted, and are not limited to the foregoing example threshold.

If the similarity 1 is between the second threshold and the first threshold, it indicates that the sound wave signal A detected by the electronic device 100 may include the preset wake-up word, and the electronic device 100 may further determine, according to S1201 to S1205 and through ultrasonic positioning, whether the sound wave signal A includes the preset wake-up word, to further determine whether the electronic device 100 wakes up. Specifically, a part of a procedure of the another wake-up method includes the following.

S1201: An electronic device 100 obtains an obstacle location based on duration between transmission and reception of an ultrasonic signal, a transmission speed of an ultrasonic wave in the air, and even a sound source location obtained by using a TOA algorithm or TDOA algorithm.

For related content of S1201, refer to related content of S801. Therefore, details are not described herein again.

S1202: The electronic device 100 uses a direction from the obstacle location as a second sound pickup direction, and determines a third sound pickup direction based on the second sound pickup direction and a first sound pickup direction.

It is considered that an error may exist in both a sound source location B2 and an obstacle location B3. To determine a sound source location more accurately, the electronic device may further re-determine the sound source location of the user with reference to the sound source location B2 and the obstacle location B3.

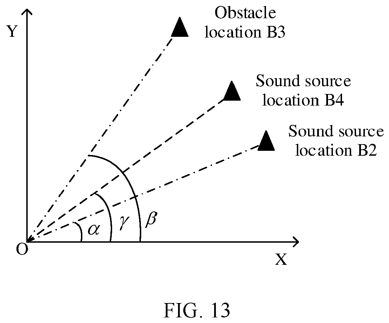

S1202 is further described below with reference to FIG. 13. FIG. 13 is a schematic diagram of a sound source location in another wake-up method according to an embodiment of this application. For example, as shown in FIG. 13, an upper surface of the electronic device 100 is an XY-axis plane, and a central point of the upper surface is a point O. X and Y axes are two mutually perpendicular axes that pass through the point O. An XY-axis coordinate system is the same as the coordinate system in FIG. 1B and FIG. 1C. The sound source location B2 is a sound source location positioned by the electronic device 100 in the first phase by using the TOA algorithm or TDOA algorithm. The obstacle location B3 is an obstacle location finally positioned by the electronic device according to S1201 by using an ultrasonic signal. It is assumed that a sound source location B4 is a finally calculated sound source location closer to the user. The point O is separately connected to B2, B3, and B4, to obtain an angle $\alpha$ between a line segment B2O and the X axis, an angle $\beta$ between a line segment B3O and the X axis, and an angle $\gamma$ between a line segment B4O and the X axis. $\alpha$ reflects a relative direction between the sound source location B2 and the electronic device. $\beta$ reflects a relative direction between the obstacle location B3 and the electronic device. $\gamma$ reflects a relative direction between the sound source location B4 and the electronic device. Both $\alpha$ and $\beta$ may be calculated according to the foregoing method while $\gamma$ is unknown. An absolute value of a difference between $\alpha$ and $\beta$ is set to $\Delta = |\alpha - \beta|$. Further, the electronic device 100 may calculate $\gamma$ according to the following formula (1):

$$\gamma = \begin{cases} \alpha, & \Delta < \theta_1 \\ \alpha \pm (k*\Delta), & \theta_1 \leq \Delta \leq \theta_2 \\ \alpha, & \Delta > \theta_2 \end{cases} \quad \text{formula (1)}$$

k is a preset proportion coefficient, and $0 \leq k \leq 1$; $\theta_1$ is a preset value 1 (for example, 5°), and $\theta_2$ is a preset value 2 (for example, 10°). When $\alpha$ is less than $\beta$, $\pm$ in the formula (1) is +. When $\alpha$ is greater than $\beta$, $\pm$ in the formula (1) is -.

That is, when $\Delta$ is small or large, it indicates that an error of the obstacle location B3 obtained through ultrasonic positioning and calculation may be large, and the electronic device 100 may determine the sound source location B2 as a final sound source location corresponding to the user. In this case, an angle $\gamma$ between the determined sound source location B4 of the user and the X axis is $\alpha$.

When $\Delta$ is within a preset range (namely, an interval defined by $\theta_1$ and $\theta_2$), the electronic device may adjust a weight of $\Delta$ based on the proportion coefficient k, to finally determine 7 , that is, the relative direction between the sound source location B4 and the electronic device 100. In other words, the electronic device may correct, on the basis of the sound source location B2 that is first positioned, the sound source location B2 with reference to the obstacle location B3 that is obtained through ultrasonic positioning, to obtain the sound source location B4 that is closer to a user location. In this way, when the positioned sound source location B2 has a large deviation from the user location due to factors such as noise, the electronic device 100 may obtain the sound source location B1 closer to the user location according to the foregoing method.

Optionally, $\theta_1$ may alternatively be a negative value.

It should be noted that the foregoing formula (1) is merely an example. $\gamma$ can also be calculated according to another formula.

Certainly, a person skilled in the art may further set another coordinate system (for example, a three-dimensional coordinate system) according to the foregoing principle. This is not limited in this application.

S1203: The electronic device 100 obtains a sound wave signal A component of the sound wave signal A in the third sound pickup direction, that is, a sound wave signal A''.

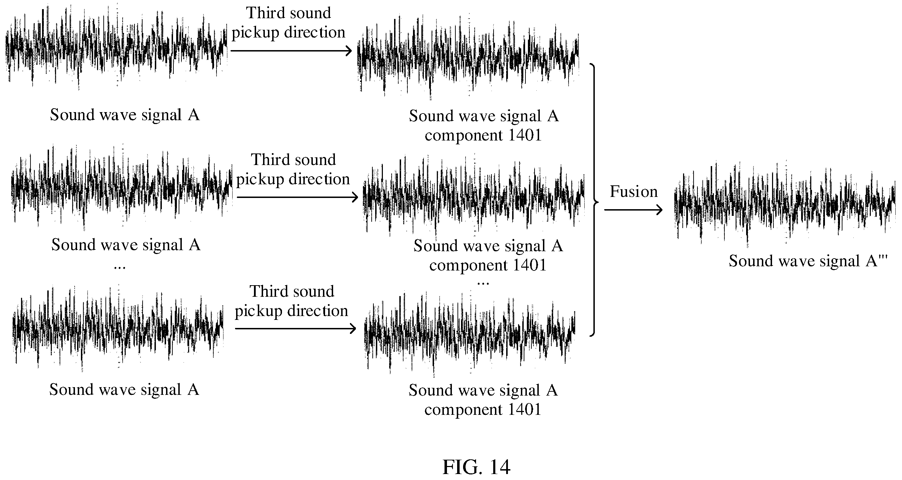

Similar to step S802 in the foregoing embodiment, the electronic device 100 may use a direction indicated by $\gamma$ as the third sound pickup direction. FIG. 14 is a schematic diagram of sound wave signal processing in a wake-up method according to an embodiment of this application. As shown in FIG. 14, the electronic device 100 may extract sound wave signal A components 1401 of M sound wave signals in the third sound pickup direction, and fuse the M extracted sound wave signal A components 1401 into the sound wave signal A''', to obtain a sound wave signal in the third sound pickup direction.

S1204: The electronic device 100 may input the sound wave signal A''' into a preset wake-up word model, and calculate a similarity 3 (also referred to as a third similarity) between the sound wave signal A''' and the wake-up word.

Similar to step S803 in the foregoing embodiment, the electronic device 100 obtains the similarity, that is, the similarity 3 (also referred to as the third similarity), between the sound wave signal A''' and the preset wake-up word. A procedure of fusion and subsequent processing is similar to the foregoing procedure of fusion and subsequent processing in the first sound pickup direction and the foregoing procedure of fusion and subsequent processing in the second sound pickup direction. For details, refer to the foregoing content. Details are not described herein again.

If the similarity 3 is greater than the third threshold, it indicates that a component, namely, the sound wave signal A''', of the sound wave signal A in the third sound pickup direction is close to the preset wake-up word, and the electronic device 100 may determine that the sound wave signal A includes the preset wake-up word. In this case, the electronic device 100 may perform step S1205. The third threshold may be greater than the first threshold, or may be less than the first threshold. For example, the third threshold may be 95% or 95 points, 80% or 80 points, or the like.

If the similarity 3 is less than the third threshold, it indicates that a component, namely, the sound wave signal A''', of the sound wave signal A in the third sound pickup direction greatly differs from the preset wake-up word, and the electronic device 100 may determine that the sound wave signal A does not include the preset wake-up word. In this case, the electronic device 100 may perform step S1206.

S1205: The electronic device 100 wakes up.

For example, the electronic device 100 may invoke a voice assistant, or activate a function of the voice assistant.

S1206: The electronic device 100 keeps a non-wake-up state.

For example, the electronic device 100 continues to keep the non-wake-up state (for example, a standby state).

Because the third sound pickup direction is closer to a direction indicated by a sound source location corresponding to the user, the electronic device 100 inputs the sound wave signal A''' into the wake-up word model, and the calculated similarity 3 is more accurate. Therefore, accuracy of waking up the electronic device 100 is higher, and a probability of false wake-up of the electronic device 100 is lower. Through experiments, the inventor proves that in a scenario with noise, the electronic device 100 according to the wake-up method provided in this embodiment of this application can improve wake-up accuracy and reduce a false wake-up probability.

In some other embodiments, when detecting, according to the foregoing method, whether the sound wave signal A includes the wake-up word, the electronic device 100 may obtain a first sound pickup direction and a second sound pickup direction, and obtain a third sound pickup direction based on the first sound pickup direction and the second sound pickup direction. Whether the electronic device wakes up is determined based on a similarity between a sound wave signal component of the sound wave signal A in the third sound pickup direction and the wake-up word. The electronic device wakes up when the similarity between a sound wave signal component of the sound wave signal A in the third sound pickup direction and the wake-up word is greater than a preset threshold. Otherwise, the electronic device continues to keep a non-wake-up state. The similarity between the sound wave signal component of the sound wave signal A in the third sound pickup direction and the wake-up word is a similarity between a sound wave feature extracted based on a preset algorithm after the sound wave signal component of the sound wave signal A in the third sound pickup direction is input into a wake-up word model, and a sound wave feature corresponding to the preset wake-up word. For details, refer to the foregoing description.

In some other embodiments, when detecting, according to the foregoing method, whether a sound wave signal A includes a wake-up word, the electronic device 100 may obtain a similarity 1 between a sound wave signal A' (for example, a sound wave signal component of the sound wave signal A in a first sound pickup direction) and the wake-up word, a similarity 2 between a sound wave signal A'' (for example, a sound wave signal component of the sound wave signal A in a second sound pickup direction) and the wake-up word, and a similarity 3 between a sound wave signal A''' (for example, a sound wave signal component of the sound wave signal A in a third sound pickup direction) and the wake-up word.

In other words, when detecting whether the sound wave signal A includes the wake-up word, the electronic device 100 may obtain all of the foregoing similarity 1 to similarity 3. In this case, it is assumed that the similarity 3 is a highest value in the similarity 1 to the similarity 3, it indicates that the third sound pickup direction corresponding to the similarity 3 is closer to a direction indicated by a sound source location corresponding to a user. In this case, the electronic device 100 may use a sound wave signal corresponding to the similarity 3 as a basis for identifying the wake-up word this time, and compare the sound wave signal with a preset threshold. If the sound wave signal is greater than the preset threshold, the electronic device wakes up. Then, a subsequent sound wave signal detected by the electronic device this time is extracted in the third sound pickup direction, and a further voice instruction is executed.

In some other embodiments, when detecting, according to the foregoing method, whether a sound wave signal A includes a wake-up word, the electronic device 100 may obtain a similarity 1 between a sound wave signal A' (for example, a sound wave signal component of the sound wave signal A in a first sound pickup direction) and the wake-up word, and a similarity 2 between a sound wave signal A" (for example, a sound wave signal component of the sound wave signal A in a second sound pickup direction) and the wake-up word.

In other words, when detecting whether the sound wave signal A includes the wake-up word, the electronic device 100 may obtain both the foregoing similarity 1 and similarity 2. In this case, it is assumed that the similarity 2 is a highest value in the similarity 1 and the similarity 2, it indicates that the second sound pickup direction corresponding to the similarity 2 is closer to a direction indicated by a sound source location corresponding to a user. In this case, the electronic device 100 may use a sound wave signal corresponding to the similarity 2 as a basis for identifying the wake-up word this time, and compare the sound wave signal with a preset threshold. If the sound wave signal is greater than the preset threshold, the electronic device wakes up. Then, a subsequent sound wave signal detected by the electronic device this time is extracted in the second sound pickup direction, and a further voice instruction is executed.

In some other embodiments, after the electronic device 100 calculates a similarity 1 according to the foregoing method, if the similarity 1 is between a first threshold and a second threshold, the electronic device 100 may calculate a similarity 2 and/or a similarity 3 according to the foregoing method. In other words, when detecting whether a sound wave signal A includes a wake-up word, the electronic device 100 may further obtain at least one of the similarity 2 and the similarity 3 after the similarity 1 meets a specific threshold condition. In this case, the electronic device 100 may determine a maximum value in all obtained similarities (for example, the similarity 1, similarity 2, and similarity 3). For example, if the similarity 1 is the maximum value, it indicates that a sound wave signal A' detected by the electronic device 100 is closer to a preset wake-up word, and a first sound pickup direction is also closer to a direction indicated by a sound source location corresponding to a user. In this case, the electronic device 100 may use the sound wave signal A' as a basis for identifying the wake-up word this time, and determine, based on the similarity 1 between the sound wave signal A' and the wake-up word, whether to wake up.

For example, the similarity 1 is still the maximum value in the similarity 1, the similarity 2, and the similarity 3. After the electronic device 100 wakes up, the electronic device 100 may continue to detect a sound wave signal based on the first sound pickup direction corresponding to the similarity 1, to identify a voice instruction of the user. For example, after the electronic device 100 wakes up, a sound wave signal may be further collected by using a voice assistant. Further, the electronic device may obtain a sound wave signal component of the sound wave signal in the first sound pickup direction, and identify and execute a corresponding voice instruction based on the sound wave signal component in the first sound pickup direction. In this scenario, compared with a second sound pickup direction or a third sound pickup direction, the first sound pickup direction is closer to the direction indicated by the sound source location corresponding to the user. Therefore, the sound wave signal in the first sound pickup direction more truly restores an actual voice of the user. In this way, accuracy of subsequent speech recognition of the electronic device 100 is also improved. A noise scenario is used as an example. Accuracy of performing speech recognition by the electronic device 100 according to the foregoing method may be improved by 4% or even more.

It should be noted that the electronic device that performs the wake-up method in the foregoing embodiment is an electronic device that has an ultrasonic positioning function. This is not limited in this embodiment of this application.

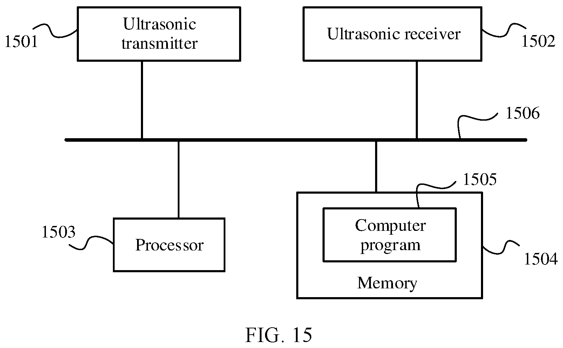

FIG. 15 is a schematic diagram of a hardware structure of an electronic device according to an embodiment of this application. The electronic device may specifically include a plurality of ultrasonic transmitters 1501 (the ultrasonic transmitter 1501 may be specifically a speaker), a plurality of ultrasonic receivers 1502 (the ultrasonic receiver 1502 may be specifically a microphone), one or more processors 1503, a memory 1504, one or more applications (not shown), and one or more computer programs 1505. The components may be connected through one or more communication buses 1506. The one or more computer programs 1505 are stored in the memory 1504 and are executed by the one or more processors 1503. The one or more computer programs 1505 include instructions. The instructions may be used to perform the related steps performed by the electronic device in the foregoing embodiments. Certainly, the electronic device may further include an input device such as a touchscreen (for example, the touchscreen may include a touch sensor and a display), and a mouse.

It should be noted that the hardware structure shown in FIG. 15 is merely an example, and is not intended to limit the scope of this application. The electronic device provided in this application may alternatively have another hardware structure.

The foregoing descriptions about implementations allow a person skilled in the art to understand that, for a purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disk.

The foregoing descriptions are merely specific implementations of embodiments of this application, but are not intended to limit the protection scope of embodiments of this application.

## Claims

1. An electronic device, in a non-wake-up state, wherein the electronic device comprises:

   a processor (110, 1503);
   a memory (121, 1504);
   M microphones (170C), wherein each microphone corresponds to one sound pickup inlet; M sound pickup inlets of the M microphones are provided on a first surface of the electronic device, and the first surface is on a plane; a distance between any two microphones in the M microphones is fixed; and M is a positive integer greater than 1;
   P ultrasonic transmitters (196, 1501), wherein each ultrasonic transmitter corresponds to one ultrasonic transmitting port; P ultrasonic transmitting ports of the P ultrasonic transmitters are provided on a second surface; P is a positive integer greater than or equal to 1; and the second surface is different from the first surface;
   Q ultrasonic receivers (197, 1502), wherein each ultrasonic receiver corresponds to one ultrasonic receiving port; Q ultrasonic receiving ports of the Q ultrasonic receivers are provided on a third surface of the electronic device, and the third surface is on a plane; a distance between any two ultrasonic receivers in the Q ultrasonic receivers is fixed; Q is a positive integer greater than 1; the Q ultrasonic receiving ports and the P ultrasonic transmitting ports face different directions; and the third surface is different from the first surface; and
   a computer program (1505), wherein the computer program is stored in the memory, and when the computer program is executed by the processor, the electronic device is enabled to perform the following steps:

      detecting a first sound wave signal by using the M microphones;
      obtaining, in response to the first sound wave signal, a first sound pickup direction based on a time difference of arrival of the first sound wave signal arriving at at least two microphones in the M microphones and a distance between some or all microphones in the at least two microphones, wherein the first sound pickup direction indicates a direction of a first projection point of a first sound source location on the plane on which the first surface is located relative to a fixed point on the plane on which the first surface is located; and the fixed point is different from the first projection point;
      obtaining a first sound wave signal component of the first sound wave signal in the first sound pickup direction; and
      when a similarity between the first sound wave signal component and a preset wake-up word is less than a preset first threshold and greater than or equal to a preset second threshold, wherein the second threshold is less than the first threshold,

         transmitting a second sound wave signal by using the P ultrasonic transmitters, wherein the second sound wave signal is an ultrasonic signal;

receiving the second sound wave signal by using the Q ultrasonic receivers;

obtaining, in response to the second sound wave signal, a second sound pickup direction based on a time difference of arrival of the second sound wave signal arriving at at least two ultrasonic receivers in the Q ultrasonic receivers and a distance between some or all ultrasonic receivers in the at least two ultrasonic receivers, wherein the second sound pickup direction indicates a direction of a second projection point of a second sound source location on the plane on which the first surface is located relative to the fixed point; and the fixed point is different from the second projection point;

obtaining (S802) a second sound wave signal component of the first sound wave signal in the second sound pickup direction; and

waking up (S803, S804) the electronic device when a similarity between the second sound wave signal component and the preset wake-up word is greater than a preset third threshold.

2. The electronic device according to claim 1, wherein the electronic device further performs the following:
waking up the electronic device when the similarity between the first sound wave signal component and the preset wake-up word is greater than the first threshold.

3. The electronic device according to claim 1 or 2, wherein the electronic device further performs the following:
keeping, by the electronic device, the non-wake-up state when the similarity between the first sound wave signal component and the preset wake-up word is less than the second threshold.

4. The electronic device according to any one of claims 1 to 3, wherein the electronic device further performs the following:
keeping, by the electronic device, the non-wake-up state when the similarity between the second sound wave signal component and the preset wake-up word is less than or equal to the third threshold.

5. The electronic device according to any one of claims 1 to 4, wherein the Q ultrasonic receivers are different from some or all of the M microphones.

6. The electronic device according to any one of claims 1 to 5, wherein the electronic device further comprises:N speakers, wherein N sound wave transmitting ports of the N speakers are provided on a fourth surface; N is a positive integer greater than or equal to 1; and the fourth surface is different from the first surface; and
wherein the second surface is parallel to the first surface.

7. The electronic device according to claim 6, wherein the electronic device further comprises:
the P ultrasonic transmitters are some or all of the N speakers; P is less than or equal to N; the ultrasonic transmitting port is the sound wave transmitting port; and the fourth surface is the same as the second surface.

8. The electronic device according to claim 6, wherein the P ultrasonic transmitters are different from some or all of the N speakers.

9. An electronic device, in a non-wake-up state, wherein the electronic device comprises:

a processor (110, 1503);

a memory (121, 1504);

M microphones (170C), wherein each microphone corresponds to one sound pickup inlet; M sound pickup inlets of the M microphones are provided on a first surface of the electronic device, and the first surface is on a plane; a distance between any two microphones in the M microphones is fixed; and M is a positive integer greater than 1;

P ultrasonic transmitters (196, 1501), wherein P ultrasonic transmitting ports of the P ultrasonic transmitters are provided on a second surface; P is a positive integer greater than or equal to 1; and the second surface is different from the first surface;

Q ultrasonic receivers (197, 1502), wherein each ultrasonic receiver corresponds to one ultrasonic receiving port; Q ultrasonic receiving ports of the Q ultrasonic receivers are provided on a third surface of the electronic device, and the third surface is on a plane; a distance between any two ultrasonic receivers in the Q ultrasonic receivers is fixed; Q is a positive integer greater than 1; the Q ultrasonic receiving ports and the P ultrasonic transmitting ports face different directions; and the third surface is different from the first surface; and

a computer program (1505), wherein the computer program is stored in the memory, and when the computer program is executed by the processor, the electronic device is enabled to perform the following steps:

detecting a first sound wave signal by using the M microphones;

obtaining, in response to the first sound wave signal, a first sound pickup direction based on a time difference of arrival of the first sound wave signal arriving at at least two microphones in the M microphones and a distance between some or all microphones in the at least two microphones, wherein the first sound pickup direction indicates a direction of a first projection point of a first sound source location on the plane on which the first surface is located relative to a fixed point on the plane on which the first surface is located; and the fixed point is different from the first projection point;

obtaining a first sound wave signal component of the first sound wave signal in the first sound pickup direction; and

when a similarity between the first sound wave signal component and a preset wake-up word is less than a preset first threshold and greater than or equal to a preset second threshold, wherein the second threshold is less than the first threshold,

transmitting a second sound wave signal by using the P ultrasonic transmitters, wherein the second sound wave signal is an ultrasonic signal;

receiving the second sound wave signal by using the Q ultrasonic receivers;

obtaining, in response to the second sound wave signal, a second sound pickup direction based on a time difference of arrival of the second sound wave signal arriving at at least two ultrasonic receivers in the Q ultrasonic receivers and a distance between some or all ultrasonic receivers in the at least two ultrasonic receivers, wherein the second sound pickup direction indicates a direction of a second projection point of a second sound source location on the plane on which the first surface is located relative to the fixed point; and the fixed point is different from the second projection point;

determining (S1202) a third sound pickup direction based on the first sound pickup direction and the second sound pickup direction, wherein the third sound pickup direction indicates a direction of a third projection point of a third sound source location on the plane on which the first surface is located relative to the fixed point;

obtaining (S1203) a third sound wave signal component of the first sound wave signal in the third sound pickup direction; and

waking up (S1204, S1205) the electronic device when a similarity between the third sound wave signal component and the preset wake-up word is greater than a preset third threshold;

wherein that the electronic device determines the third sound pickup direction based on the first sound pickup direction and the second sound pickup direction includes:

(1) if an absolute value of a direction deviation between the first sound pickup direction and the second sound pickup direction is less than a preset fourth threshold, or if an absolute value of a direction deviation between the first sound pickup direction and the second sound pickup direction is greater than a preset fifth threshold, the third sound pickup direction is the same as the first sound pickup direction; or

(2) if the absolute value of the direction deviation between the first sound pickup direction and the second sound pickup direction is greater than the preset fourth threshold and less than the fifth threshold, the third sound pickup direction is determined by adding, in the first sound pickup direction, a product of the absolute value of the direction deviation between the first sound pickup direction and the second sound pickup direction and a preset proportion coefficient.

10. A wake-up method, applied to an electronic device, wherein the electronic device is in a non-wake-up state, and the electronic device comprises: a processor; a memory; M microphones, wherein each microphone corresponds to one sound pickup inlet, M sound pickup inlets of the M microphones are provided on a first surface of the electronic device, the first surface is on a plane, a distance between any two microphones in the M microphones is fixed, and M is a positive integer greater than 1; P ultrasonic transmitters, wherein P ultrasonic transmitting ports of the P ultrasonic transmitters are provided on a second surface, P is a positive integer greater than or equal to 1, and the second surface is different from the first surface; and Q ultrasonic receivers, wherein each ultrasonic receiver corresponds to one ultrasonic receiving port, Q ultrasonic receiving ports of the Q ultrasonic receivers are provided on a third surface of the electronic device, the third surface is on a plane, a distance between any two ultrasonic receivers in the Q ultrasonic receivers is fixed, Q is a positive integer greater than 1, the Q ultrasonic receiving ports and the P ultrasonic transmitting ports face different directions, and the third surface is different from the first surface; and the method comprises:

detecting a first sound wave signal by using the M microphones;

obtaining, in response to the first sound wave signal, a first sound pickup direction based on a time difference of arrival of the first sound wave signal arriving at at least two microphones in the M microphones and a distance between some or all microphones in the at least two microphones, wherein the first sound pickup direction indicates a direction of a first projection point of a first sound source location on the plane on which the first surface is located relative to a fixed point on the plane on which the first surface is located; and the fixed point is different from the first projection point;

obtaining a first sound wave signal component of the first sound wave signal in the first sound pickup direction; and when a similarity between the first sound wave signal component and a preset wake-up word is less than a preset first threshold and greater than or equal to a preset second threshold,

transmitting a second sound wave signal by using the P ultrasonic transmitters, wherein the second sound wave signal is an ultrasonic signal;

receiving the second sound wave signal by using the Q ultrasonic receivers;

obtaining, in response to the second sound wave signal, a second sound pickup direction based on a time difference of arrival of the second sound wave signal arriving at at least two ultrasonic receivers in the Q ultrasonic receivers and a distance between some or all ultrasonic receivers in the at least two ultrasonic receivers, wherein the second sound pickup direction indicates a direction of a second projection point of a second sound source location on the plane on which the first surface is located relative to the fixed point; and the fixed point is different from the second projection point;

obtaining a second sound wave signal component of the first sound wave signal in the second sound pickup direction; and

waking up the electronic device when a similarity between the second sound wave signal component and the preset wake-up word is greater than a preset third threshold.

11. The method according to claim 10, wherein the method further comprises:
waking up the electronic device when the similarity between the first sound wave signal component and the preset wake-up word is greater than the first threshold.

12. The method according to claim 10 or 11, wherein the method further comprises:
keeping, by the electronic device, the non-wake-up state when the similarity between the first sound wave signal component and the preset wake-up word is less than the second threshold.

13. The method according to any one of claims 10 to 12, wherein the method further comprises:
keeping, by the electronic device, the non-wake-up state when the similarity between the second sound wave signal component and the preset wake-up word is less than or equal to the third threshold.

14. A wake-up method, applied to an electronic device, wherein the electronic device is in a non-wake-up state, and the electronic device comprises: a processor; a memory; M microphones, wherein each microphone corresponds to one sound pickup inlet, M sound pickup inlets of the M microphones are provided on a first surface of the electronic device, the first surface is on a plane, a distance between any two microphones in the M microphones is fixed, and M is a positive integer greater than 1; P ultrasonic transmitters, wherein P ultrasonic transmitting ports of the P ultrasonic transmitters are provided on a second surface, P is a positive integer greater than or equal to 1, and the second surface is different from the first surface; and Q ultrasonic receivers, wherein each ultrasonic receiver corresponds to one ultrasonic receiving port, Q ultrasonic receiving ports of the Q ultrasonic receivers are provided on a third surface of the electronic device, the third surface is on a plane, a distance between any two ultrasonic receivers in the Q ultrasonic receivers is fixed, Q is a positive integer greater than 1, the Q ultrasonic receiving ports and the P ultrasonic transmitting ports face different directions, and the third surface is different from the first surface; and the method comprises:

detecting a first sound wave signal by using the M microphones;

obtaining, in response to the first sound wave signal, a first sound pickup direction based on a time difference of arrival of the first sound wave signal arriving at at least two microphones in the M microphones and a distance between some or all microphones in the at least two microphones, wherein the first sound pickup direction indicates a direction of a first projection point of a first sound source location on the plane on which the first surface is located relative to a fixed point on the plane on which the first surface is located; and the fixed point is different from the first projection point;

obtaining a first sound wave signal component of the first sound wave signal in the first sound pickup direction; and when a similarity between the first sound wave signal component and a preset wake-up word is less than a preset first threshold and greater than or equal to a preset second threshold, wherein the second threshold is less than the first threshold,

transmitting a second sound wave signal by using the P ultrasonic transmitters, wherein the second sound wave signal is an ultrasonic signal;

receiving the second sound wave signal by using the Q ultrasonic receivers;

obtaining, in response to the second sound wave signal, a second sound pickup direction based on a time difference of arrival of the second sound wave signal arriving at at least two ultrasonic receivers in the Q ultrasonic receivers and a distance between some or all ultrasonic receivers in the at least two ultrasonic receivers, wherein the second sound pickup direction indicates a direction of a second projection point of a second sound source location on the plane on which the first surface is located relative to the fixed point; and the fixed point is different from the second projection point;

determining (S1202) a third sound pickup direction based on the first sound pickup direction and the second sound pickup direction, wherein the third sound pickup direction indicates a direction of a third projection point of a third sound source location on the plane on which the first surface is located relative to the fixed point;

obtaining (S1203) a third sound wave signal component of the first sound wave signal in the third sound pickup direction; and

waking up (S1204, S1205) the electronic device when a similarity between the third sound wave signal component and the preset wake-up word is greater than a preset third threshold;

wherein that the electronic device determines the third sound pickup direction based on the first sound pickup direction and the second sound pickup direction includes:

(1) if an absolute value of a direction deviation between the first sound pickup direction and the second sound pickup direction is less than a preset fourth threshold, or if an absolute value of a direction deviation between the first sound pickup direction and the second sound pickup direction is greater than a preset fifth threshold, the third sound pickup direction is the same as the first sound pickup direction; or
(2) if the absolute value of the direction deviation between the first sound pickup direction and the second sound pickup direction is greater than the preset fourth threshold and less than the fifth threshold, the third sound pickup direction is determined by adding, in the first sound pickup direction, a product of the absolute value of the direction deviation between the first sound pickup direction and the second sound pickup direction and a preset proportion coefficient.

15. A computer-readable storage medium, wherein the computer-readable storage medium comprises a computer program, and when the computer program is run on an electronic device, the electronic device is enabled to perform the method according to any one of claims 10 to 14.

**Patentansprüche**

1. Elektronische Vorrichtung in einem Nicht-Aufweckzustand, wobei die elektronische Vorrichtung Folgendes umfasst:

einen Prozessor (110, 1503);
einen Speicher (121, 1504);
M Mikrofone (170C), wobei jedes Mikrofon einem Schallaufnahmeeinlass entspricht; M Schallaufnahmeeinlässe der M Mikrofone auf einer ersten Oberfläche der elektronischen Vorrichtung bereitgestellt sind und die erste Oberfläche auf einer Ebene liegt; ein Abstand zwischen zwei beliebigen Mikrofonen in den M Mikrofonen festgelegt ist; und M eine positive Ganzzahl größer als 1 ist;
P Ultraschallüberträger (196, 1501), wobei jeder Ultraschallüberträger einem Ultraschallübertrageanschluss entspricht; P Ultraschallübertrageanschlüsse der P Ultraschallüberträger auf einer zweiten Oberfläche bereitgestellt sind; P eine positive Ganzzahl größer als oder gleich 1 ist; und sich die zweite Oberfläche von der ersten Oberfläche unterscheidet;
Q Ultraschallempfänger (197, 1502), wobei jeder Ultraschallempfänger einem Ultraschallempfangsanschluss entspricht; Q Ultraschallempfangsanschlüsse der Q Ultraschallempfänger auf einer dritten Oberfläche der elektronischen Vorrichtung bereitgestellt sind und die dritte Oberfläche auf einer Ebene liegt; ein Abstand zwischen zwei beliebigen Ultraschallempfängern in den Q Ultraschallempfängern festgelegt ist; Q eine positive Ganzzahl größer als 1 ist; die Q Ultraschallempfangsanschlüsse und die P Ultraschallübertrageanschlüsse unterschiedlichen Richtungen zugewandt sind; und sich die dritte Oberfläche von der ersten Oberfläche unterscheidet; und

ein Computerprogramm (1505), wobei das Computerprogramm in dem Speicher gespeichert ist und, wenn das Computerprogramm durch den Prozessor ausgeführt wird, es der elektronischen Vorrichtung ermöglicht wird, die folgenden Schritte durchzuführen:

Detektieren eines ersten Schallwellensignals unter Verwendung der M Mikrofone;

Erlangen, als Reaktion auf das erste Schallwellensignal, einer ersten Schallaufnahmerichtung basierend auf einer Ankunftszeitdifferenz des ersten Schallwellensignals, das an mindestens zwei Mikrofonen in den M Mikrofonen ankommt, und einem Abstand zwischen einigen oder allen Mikrofonen in den mindestens zwei Mikrofonen, wobei die erste Schallaufnahmerichtung eine Richtung eines ersten Projektionspunkts eines ersten Schallquellenorts auf der Ebene, auf der sich die erste Oberfläche befindet, in Bezug auf einen festen Punkt auf der Ebene, auf der sich die erste Oberfläche befindet, angibt; und sich der feste Punkt von dem ersten Projektionspunkt unterscheidet;

Erlangen einer ersten Schallwellensignalkomponente des ersten Schallwellensignals in der ersten Schallaufnahmerichtung; und

wenn eine Ähnlichkeit zwischen der ersten Schallwellensignalkomponente und einem voreingestellten Aufweckwort kleiner als ein voreingestellter erster Schwellenwert und größer als oder gleich einem voreingestellten zweiten Schwellenwert ist, wobei der zweite Schwellenwert kleiner als der erste Schwellenwert ist,

Übertragen eines zweiten Schallwellensignals unter Verwendung der P Ultraschallüberträger, wobei das zweite Schallwellensignal ein Ultraschallsignal ist;

Empfangen des zweiten Schallwellensignals unter Verwendung der Q Ultraschallempfänger;

Erlangen, als Reaktion auf das zweite Schallwellensignal, einer zweiten Schallaufnahmerichtung basierend auf einer Ankunftszeitdifferenz des zweiten Schallwellensignals, das an mindestens zwei Ultraschallempfängern in den Q Ultraschallempfängern ankommt, und einem Abstand zwischen einigen oder allen Ultraschallempfängern in den mindestens zwei Ultraschallempfängern, wobei die zweite Schallaufnahmerichtung eine Richtung eines zweiten Projektionspunkts eines zweiten Schallquellenorts auf der Ebene, auf der sich die erste Oberfläche befindet, in Bezug auf den festen Punkt angibt; und sich der feste Punkt von dem zweiten Projektionspunkt unterscheidet;

Erlangen (S802) einer zweiten Schallwellensignalkomponente des ersten Schallwellensignals in der zweiten Schallaufnahmerichtung; und

Aufwecken (S803, S804) der elektronischen Vorrichtung, wenn eine Ähnlichkeit zwischen der zweiten Schallwellensignalkomponente und dem voreingestellten Aufweckwort größer als ein voreingestellter dritter Schwellenwert ist.

2. Elektronische Vorrichtung nach Anspruch 1, wobei die elektronische Vorrichtung ferner Folgendes durchführt:
Aufwecken der elektronischen Vorrichtung, wenn die Ähnlichkeit zwischen der ersten Schallwellensignalkomponente und dem voreingestellten Aufweckwort größer als der erste Schwellenwert ist.

3. Elektronische Vorrichtung nach Anspruch 1 oder 2, wobei die elektronische Vorrichtung ferner Folgendes durchführt:
Beibehalten, durch die elektronische Vorrichtung, des Nicht-Aufweckzustands, wenn die Ähnlichkeit zwischen der ersten Schallwellensignalkomponente und dem voreingestellten Aufweckwort kleiner als der zweite Schwellenwert ist.

4. Elektronische Vorrichtung nach einem der Ansprüche 1 bis 3, wobei die elektronische Vorrichtung ferner Folgendes durchführt: Beibehalten, durch die elektronische Vorrichtung, des Nicht-Aufweckzustands, wenn die Ähnlichkeit zwischen der zweiten Schallwellensignalkomponente und dem voreingestellten Aufweckwort kleiner als oder gleich dem dritten Schwellenwert ist.

5. Elektronische Vorrichtung nach einem der Ansprüche 1 bis 4, wobei sich die Q Ultraschallempfänger von einigen oder allen M Mikrofonen unterscheiden.

6. Elektronische Vorrichtung nach einem der Ansprüche 1 bis 5, wobei die elektronische Vorrichtung ferner Folgendes umfasst: N Lautsprecher, wobei N Schallwellenübertrageanschlüsse der N Lautsprecher auf einer vierten Oberfläche bereitgestellt sind; N eine positive Ganzzahl größer als oder gleich 1 ist; und sich die vierte Oberfläche von der ersten Oberfläche unterscheidet; und
wobei die zweite Oberfläche parallel zu der ersten Oberfläche ist.

7. Elektronische Vorrichtung nach Anspruch 6, wobei die elektronische Vorrichtung ferner Folgendes umfasst:

die P Ultraschallüberträger sind einige oder alle der N Lautsprecher; P ist kleiner als oder gleich N; der Ultraschallübertrageanschluss ist der Schallwellenübertrageanschluss; und die vierte Oberfläche ist die gleiche wie die zweite Oberfläche.

8. Elektronische Vorrichtung nach Anspruch 6, wobei sich die P Ultraschallüberträger von einigen oder allen N Lautsprechern unterscheiden.

9. Elektronische Vorrichtung in einem Nicht-Aufweckzustand, wobei die elektronische Vorrichtung Folgendes umfasst:

einen Prozessor (110, 1503);
einen Speicher (121, 1504);
M Mikrofone (170C), wobei jedes Mikrofon einem Schallaufnahmeeinlass entspricht; M Schallaufnahmeeinlässe der M Mikrofone auf einer ersten Oberfläche der elektronischen Vorrichtung bereitgestellt sind und die erste Oberfläche auf einer Ebene liegt; ein Abstand zwischen zwei beliebigen Mikrofonen in den M Mikrofonen festgelegt ist; und M eine positive Ganzzahl größer als 1 ist;
P Ultraschallüberträger (196, 1501), wobei P Ultraschallübertrageanschlüsse der P Ultraschallüberträger auf einer zweiten Oberfläche bereitgestellt sind; P eine positive Ganzzahl größer als oder gleich 1 ist; und sich die zweite Oberfläche von der ersten Oberfläche unterscheidet;
Q Ultraschallempfänger (197, 1502), wobei jeder Ultraschallempfänger einem Ultraschallempfangsanschluss entspricht; Q Ultraschallempfangsanschlüsse der Q Ultraschallempfänger auf einer dritten Oberfläche der elektronischen Vorrichtung bereitgestellt sind und die dritte Oberfläche auf einer Ebene liegt; ein Abstand zwischen zwei beliebigen Ultraschallempfängern in den Q Ultraschallempfängern festgelegt ist; Q eine positive Ganzzahl größer als 1 ist; die Q Ultraschallempfangsanschlüsse und die P Ultraschallübertrageanschlüsse unterschiedlichen Richtungen zugewandt sind; und sich die dritte Oberfläche von der ersten Oberfläche unterscheidet; und
ein Computerprogramm (1505), wobei das Computerprogramm in dem Speicher gespeichert ist und, wenn das Computerprogramm durch den Prozessor ausgeführt wird, es der elektronischen Vorrichtung ermöglicht wird, die folgenden Schritte durchzuführen:

Detektieren eines ersten Schallwellensignals unter Verwendung der M Mikrofone;
Erlangen, als Reaktion auf das erste Schallwellensignal, einer ersten Schallaufnahmerichtung basierend auf einer Ankunftszeitdifferenz des ersten Schallwellensignals, das an mindestens zwei Mikrofonen in den M Mikrofonen ankommt, und einem Abstand zwischen einigen oder allen Mikrofonen in den mindestens zwei Mikrofonen, wobei die erste Schallaufnahmerichtung eine Richtung eines ersten Projektionspunkts eines ersten Schallquellenorts auf der Ebene, auf der sich die erste Oberfläche befindet, in Bezug auf einen festen Punkt auf der Ebene, auf der sich die erste Oberfläche befindet, angibt; und sich der feste Punkt von dem ersten Projektionspunkt unterscheidet;
Erlangen einer ersten Schallwellensignalkomponente des ersten Schallwellensignals in der ersten Schallaufnahmerichtung; und
wenn eine Ähnlichkeit zwischen der ersten Schallwellensignalkomponente und einem voreingestellten Aufweckwort kleiner als ein voreingestellter erster Schwellenwert und größer als oder gleich einem voreingestellten zweiten Schwellenwert ist, wobei der zweite Schwellenwert kleiner als der erste Schwellenwert ist,
Übertragen eines zweiten Schallwellensignals unter Verwendung der P Ultraschallüberträger, wobei das zweite Schallwellensignal ein Ultraschallsignal ist;
Empfangen des zweiten Schallwellensignals unter Verwendung der Q Ultraschallempfänger;
Erlangen, als Reaktion auf das zweite Schallwellensignal, einer zweiten Schallaufnahmerichtung basierend auf einer Ankunftszeitdifferenz des zweiten Schallwellensignals, das an mindestens zwei Ultraschallempfängern in den Q Ultraschallempfängern ankommt, und einem Abstand zwischen einigen oder allen Ultraschallempfängern in den mindestens zwei Ultraschallempfängern, wobei die zweite Schallaufnahmerichtung eine Richtung eines zweiten Projektionspunkts eines zweiten Schallquellenorts auf der Ebene, auf der sich die erste Oberfläche befindet, in Bezug auf den festen Punkt angibt; und sich der feste Punkt von dem zweiten Projektionspunkt unterscheidet;
Bestimmen (S1202) einer dritten Schallaufnahmerichtung basierend auf der ersten Schallaufnahmerichtung und der zweiten Schallaufnahmerichtung, wobei die dritte Schallaufnahmerichtung eine Richtung eines dritten Projektionspunkts eines dritten Schallquellenorts auf der Ebene, auf der sich die erste Oberfläche befindet, in Bezug auf den festen Punkt angibt;
Erlangen (S1203) einer dritten Schallwellensignalkomponente des ersten Schallwellensignals in der dritten Schallaufnahmerichtung; und

Aufwecken (S1204, S1205) der elektronischen Vorrichtung, wenn eine Ähnlichkeit zwischen der dritten Schallwellensignalkomponente und dem voreingestellten Aufweckwort größer als ein voreingestellter dritter Schwellenwert ist;

wobei, dass die elektronische Vorrichtung die dritte Schallaufnahmerichtung basierend auf der ersten Schallaufnahmerichtung und der zweiten Schallaufnahmerichtung bestimmt, Folgendes beinhaltet:

(1) falls ein absoluter Wert einer Richtungsabweichung zwischen der ersten Schallaufnahmerichtung und der zweiten Schallaufnahmerichtung kleiner als ein voreingestellter vierter Schwellenwert ist oder falls ein absoluter Wert einer Richtungsabweichung zwischen der ersten Schallaufnahmerichtung und der zweiten Schallaufnahmerichtung größer als ein voreingestellter fünfter Schwellenwert ist, ist die dritte Schallaufnahmerichtung die gleiche wie die erste Schallaufnahmerichtung; oder

(2) falls der absolute Wert der Richtungsabweichung zwischen der ersten Schallaufnahmerichtung und der zweiten Schallaufnahmerichtung größer als der voreingestellte vierte Schwellenwert und kleiner als der fünfte Schwellenwert ist, wird die dritte Schallaufnahmerichtung durch Hinzufügen, in der ersten Schallaufnahmerichtung, eines Produkts des absoluten Wertes der Richtungsabweichung zwischen der ersten Schallaufnahmerichtung und der zweiten Schallaufnahmerichtung und eines voreingestellten Proportionalkoeffizienten bestimmt.

10. Aufweckverfahren, das auf eine elektronische Vorrichtung angewandt wird, wobei sich die elektronische Vorrichtung in einem Nicht-Aufweckzustand befindet und die elektronische Vorrichtung Folgendes umfasst: einen Prozessor; einen Speicher; M Mikrofone, wobei jedes Mikrofon einem Schallaufnahmeeinlass entspricht, M Schallaufnahmeeinlässe der M Mikrofone auf einer ersten Oberfläche der elektronischen Vorrichtung bereitgestellt sind, die erste Oberfläche auf einer Ebene liegt, ein Abstand zwischen zwei beliebigen Mikrofonen in den M Mikrofonen festgelegt ist und M eine positive Ganzzahl größer als 1 ist; P Ultraschallüberträger, wobei P Ultraschallübertrageanschlüsse der P Ultraschallüberträger auf einer zweiten Oberfläche bereitgestellt sind, P eine positive Ganzzahl größer als oder gleich 1 ist und sich die zweite Oberfläche von der ersten Oberfläche unterscheidet; und Q Ultraschallempfänger, wobei jeder Ultraschallempfänger einem Ultraschallempfangsanschluss entspricht, Q Ultraschallempfangsanschlüsse der Q Ultraschallempfänger auf einer dritten Oberfläche der elektronischen Vorrichtung bereitgestellt sind, die dritte Oberfläche auf einer Ebene liegt, ein Abstand zwischen zwei beliebigen Ultraschallempfängern in den Q Ultraschallempfängern festgelegt ist, Q eine positive Ganzzahl größer als 1 ist, die Q Ultraschallempfangsanschlüsse und die P Ultraschallübertrageanschlüsse unterschiedlichen Richtungen zugewandt sind und sich die dritte Oberfläche von der ersten Oberfläche unterscheidet; und das Verfahren Folgendes umfasst:

Detektieren eines ersten Schallwellensignals unter Verwendung der M Mikrofone;

Erlangen, als Reaktion auf das erste Schallwellensignal, einer ersten Schallaufnahmerichtung basierend auf einer Ankunftszeitdifferenz des ersten Schallwellensignals, das an mindestens zwei Mikrofonen in den M Mikrofonen ankommt, und einem Abstand zwischen einigen oder allen Mikrofonen in den mindestens zwei Mikrofonen, wobei die erste Schallaufnahmerichtung eine Richtung eines ersten Projektionspunkts eines ersten Schallquellenorts auf der Ebene, auf der sich die erste Oberfläche befindet, in Bezug auf einen festen Punkt auf der Ebene, auf der sich die erste Oberfläche befindet, angibt; und sich der feste Punkt von dem ersten Projektionspunkt unterscheidet;

Erlangen einer ersten Schallwellensignalkomponente des ersten Schallwellensignals in der ersten Schallaufnahmerichtung; und

wenn eine Ähnlichkeit zwischen der ersten Schallwellensignalkomponente und einem voreingestellten Aufweckwort kleiner als ein voreingestellter erster Schwellenwert und größer als oder gleich einem voreingestellten zweiten Schwellenwert ist,

Übertragen eines zweiten Schallwellensignals unter Verwendung der P Ultraschallüberträger, wobei das zweite Schallwellensignal ein Ultraschallsignal ist;

Empfangen des zweiten Schallwellensignals unter Verwendung der Q Ultraschallempfänger;

Erlangen, als Reaktion auf das zweite Schallwellensignal, einer zweiten Schallaufnahmerichtung basierend auf einer Ankunftszeitdifferenz des zweiten Schallwellensignals, das an mindestens zwei Ultraschallempfängern in den Q Ultraschallempfängern ankommt, und einem Abstand zwischen einigen oder allen Ultraschallempfängern in den mindestens zwei Ultraschallempfängern, wobei die zweite Schallaufnahmerichtung eine Richtung eines zweiten Projektionspunkts eines zweiten Schallquellenorts auf der Ebene, auf der sich die erste Oberfläche befindet, in Bezug auf den festen Punkt angibt; und sich der feste Punkt von dem zweiten Projektionspunkt unterscheidet;

Erlangen einer zweiten Schallwellensignalkomponente des ersten Schallwellensignals in der zweiten Schallaufnahmerichtung; und Aufwecken der elektronischen Vorrichtung, wenn eine Ähnlichkeit zwischen der zweiten Schallwellensignalkomponente und dem voreingestellten Aufweckwort größer als ein voreingestellter dritter Schwellenwert ist.

11. Verfahren nach Anspruch 10, wobei das Verfahren ferner Folgendes umfasst:
Aufwecken der elektronischen Vorrichtung, wenn die Ähnlichkeit zwischen der ersten Schallwellensignalkomponente und dem voreingestellten Aufweckwort größer als der erste Schwellenwert ist.

12. Verfahren nach Anspruch 10 oder 11, wobei das Verfahren ferner Folgendes umfasst:
Beibehalten, durch die elektronische Vorrichtung, des Nicht-Aufweckzustands, wenn die Ähnlichkeit zwischen der ersten Schallwellensignalkomponente und dem voreingestellten Aufweckwort kleiner als der zweite Schwellenwert ist.

13. Verfahren nach einem der Ansprüche 10 bis 12, wobei das Verfahren ferner Folgendes umfasst:
Beibehalten, durch die elektronische Vorrichtung, des Nicht-Aufweckzustands, wenn die Ähnlichkeit zwischen der zweiten Schallwellensignalkomponente und dem voreingestellten Aufweckwort kleiner als oder gleich dem dritten Schwellenwert ist.

14. Aufweckverfahren, das auf eine elektronische Vorrichtung angewandt wird, wobei sich die elektronische Vorrichtung in einem Nicht-Aufweckzustand befindet und die elektronische Vorrichtung Folgendes umfasst: einen Prozessor; einen Speicher; M Mikrofone, wobei jedes Mikrofon einem Schallaufnahmeeinlass entspricht, M Schallaufnahmeeinlässe der M Mikrofone auf einer ersten Oberfläche der elektronischen Vorrichtung bereitgestellt sind, die erste Oberfläche auf einer Ebene liegt, ein Abstand zwischen zwei beliebigen Mikrofonen in den M Mikrofonen festgelegt ist und M eine positive Ganzzahl größer als 1 ist; P Ultraschallüberträger, wobei P Ultraschallübertrageanschlüsse der P Ultraschallüberträger auf einer zweiten Oberfläche bereitgestellt sind, P eine positive Ganzzahl größer als oder gleich 1 ist und sich die zweite Oberfläche von der ersten Oberfläche unterscheidet; und Q Ultraschallempfänger, wobei jeder Ultraschallempfänger einem Ultraschallempfangsanschluss entspricht, Q Ultraschallempfangsanschlüsse der Q Ultraschallempfänger auf einer dritten Oberfläche der elektronischen Vorrichtung bereitgestellt sind, die dritte Oberfläche auf einer Ebene liegt, ein Abstand zwischen zwei beliebigen Ultraschallempfängern in den Q Ultraschallempfängern festgelegt ist, Q eine positive Ganzzahl größer als 1 ist, die Q Ultraschallempfangsanschlüsse und die P Ultraschallübertrageanschlüsse unterschiedlichen Richtungen zugewandt sind und sich die dritte Oberfläche von der ersten Oberfläche unterscheidet; und das Verfahren Folgendes umfasst:

Detektieren eines ersten Schallwellensignals unter Verwendung der M Mikrofone;
Erlangen, als Reaktion auf das erste Schallwellensignal, einer ersten Schallaufnahmerichtung basierend auf einer Ankunftszeitdifferenz des ersten Schallwellensignals, das an mindestens zwei Mikrofonen in den M Mikrofonen ankommt, und einem Abstand zwischen einigen oder allen Mikrofonen in den mindestens zwei Mikrofonen, wobei die erste Schallaufnahmerichtung eine Richtung eines ersten Projektionspunkts eines ersten Schallquellenorts auf der Ebene, auf der sich die erste Oberfläche befindet, in Bezug auf einen festen Punkt auf der Ebene, auf der sich die erste Oberfläche befindet, angibt; und sich der feste Punkt von dem ersten Projektionspunkt unterscheidet;
Erlangen einer ersten Schallwellensignalkomponente des ersten Schallwellensignals in der ersten Schallaufnahmerichtung; und wenn eine Ähnlichkeit zwischen der ersten Schallwellensignalkomponente und einem voreingestellten Aufweckwort kleiner als ein voreingestellter erster Schwellenwert und größer als oder gleich einem voreingestellten zweiten Schwellenwert ist, wobei der zweite Schwellenwert kleiner als der erste Schwellenwert ist,
Übertragen eines zweiten Schallwellensignals unter Verwendung der P Ultraschallüberträger, wobei das zweite Schallwellensignal ein Ultraschallsignal ist;
Empfangen des zweiten Schallwellensignals unter Verwendung der Q Ultraschallempfänger;
Erlangen, als Reaktion auf das zweite Schallwellensignal, einer zweiten Schallaufnahmerichtung basierend auf einer Ankunftszeitdifferenz des zweiten Schallwellensignals, das an mindestens zwei Ultraschallempfängern in den Q Ultraschallempfängern ankommt, und einem Abstand zwischen einigen oder allen Ultraschallempfängern in den mindestens zwei Ultraschallempfängern, wobei die zweite Schallaufnahmerichtung eine Richtung eines zweiten Projektionspunkts eines zweiten Schallquellenorts auf der Ebene, auf der sich die erste Oberfläche befindet, in Bezug auf den festen Punkt angibt; und sich der feste Punkt von dem zweiten Projektionspunkt unterscheidet;
Bestimmen (S1202) einer dritten Schallaufnahmerichtung basierend auf der ersten Schallaufnahmerichtung und der zweiten Schallaufnahmerichtung, wobei die dritte Schallaufnahmerichtung eine Richtung eines dritten Projektionspunkts eines dritten Schallquellenorts auf der Ebene, auf der sich die erste Oberfläche befindet, in Bezug auf den festen Punkt angibt;

Erlangen (S1203) einer dritten Schallwellensignalkomponente des ersten Schallwellensignals in der dritten Schallaufnahmerichtung; und

Aufwecken (S1204, S1205) der elektronischen Vorrichtung, wenn eine Ähnlichkeit zwischen der dritten Schallwellensignalkomponente und dem voreingestellten Aufweckwort größer als ein voreingestellter dritter Schwellenwert ist;

wobei, dass die elektronische Vorrichtung die dritte Schallaufnahmerichtung basierend auf der ersten Schallaufnahmerichtung und der zweiten Schallaufnahmerichtung bestimmt, Folgendes beinhaltet:

(1) falls ein absoluter Wert einer Richtungsabweichung zwischen der ersten Schallaufnahmerichtung und der zweiten Schallaufnahmerichtung kleiner als ein voreingestellter vierter Schwellenwert ist oder falls ein absoluter Wert einer Richtungsabweichung zwischen der ersten Schallaufnahmerichtung und der zweiten Schallaufnahmerichtung größer als ein voreingestellter fünfter Schwellenwert ist, ist die dritte Schallaufnahmerichtung die gleiche wie die erste Schallaufnahmerichtung; oder

(2) falls der absolute Wert der Richtungsabweichung zwischen der ersten Schallaufnahmerichtung und der zweiten Schallaufnahmerichtung größer als der voreingestellte vierte Schwellenwert und kleiner als der fünfte Schwellenwert ist, wird die dritte Schallaufnahmerichtung durch Hinzufügen, in der ersten Schallaufnahmerichtung, eines Produkts des absoluten Wertes der Richtungsabweichung zwischen der ersten Schallaufnahmerichtung und der zweiten Schallaufnahmerichtung und eines voreingestellten Proportionalkoeffizienten bestimmt.

15. Computerlesbares Speichermedium, wobei das computerlesbare Speichermedium ein Computerprogramm umfasst und, wenn das Computerprogramm auf einer elektronischen Vorrichtung ausgeführt wird, es der elektronischen Vorrichtung ermöglicht wird, das Verfahren nach einem der Ansprüche 10 bis 14 durchzuführen.

**Revendications**

1. Dispositif électronique, dans un état de non-réveil, dans lequel le dispositif électronique comprend :

un processeur (110, 1503) ;

une mémoire (121, 1504) ;

M microphones (170C), dans lequel chaque microphone correspond à une entrée de captation sonore ; M entrées de captation sonore des M microphones sont prévues sur une première surface du dispositif électronique, et la première surface est sur un plan ; une distance entre deux microphones quelconques dans les M microphones est fixe ; et M est un entier positif supérieur à 1 ;

P émetteurs ultrasoniques (196, 1501), dans lequel chaque émetteur ultrasonique correspond à un port de transmission ultrasonique ; P ports de transmission ultrasoniques des P émetteurs ultrasoniques sont prévus sur une deuxième surface ; P est un entier positif supérieur ou égal à 1 ; et la deuxième surface est différente de la première surface ;

Q récepteurs ultrasoniques (197, 1502), dans lequel chaque récepteur ultrasonique correspond à un port de réception ultrasonique ; Q ports de réception ultrasoniques des Q récepteurs ultrasoniques sont prévus sur une troisième surface du dispositif électronique, et la troisième surface est sur un plan ; une distance entre deux récepteurs ultrasoniques quelconques des Q récepteurs ultrasoniques est fixe ; Q est un entier positif supérieur à 1 ; les Q ports de réception ultrasoniques et les P ports de transmission ultrasoniques sont orientés dans des directions différentes ; et la troisième surface est différente de la première surface ; et

un programme informatique (1505), dans lequel le programme informatique est stocké dans la mémoire, et lorsque le programme informatique est exécuté par le processeur, le dispositif électronique est activé pour réaliser les étapes suivantes :

la détection d'un premier signal d'onde sonore en utilisant les M microphones ;

l'obtention, en réponse au premier signal d'onde sonore, d'une première direction de captation sonore sur la base d'une différence de temps d'arrivée du premier signal d'onde sonore arrivant à au moins deux microphones parmi les M microphones et d'une distance entre certains ou tous les microphones parmi les au moins deux microphones, dans lequel la première direction de captation sonore indique une direction d'un premier point de projection d'un premier emplacement de source sonore sur le plan sur lequel la première surface est située par rapport à un point fixe sur le plan sur lequel la première surface est située ; et le point fixe est différent du premier point de projection ;

l'obtention d'un premier composant de signal d'onde sonore du premier signal d'onde sonore dans la première direction de captation sonore ; et

lorsqu'une similarité entre le premier composant de signal d'onde sonore et un mot de réveil prédéfini est inférieure à un premier seuil prédéfini et supérieure ou égale à un deuxième seuil prédéfini, dans lequel le deuxième seuil est inférieur au premier seuil,

la transmission d'un second signal d'onde sonore en utilisant les P émetteurs ultrasoniques, dans lequel le second signal d'onde sonore est un signal ultrasonique ;

la réception du second signal d'onde sonore en utilisant les Q récepteurs ultrasoniques ;

l'obtention, en réponse au second signal d'onde sonore, d'une deuxième direction de captation sonore sur la base d'une différence de temps d'arrivée du second signal d'onde sonore arrivant à au moins deux récepteurs ultrasoniques parmi les Q récepteurs ultrasoniques et d'une distance entre certains ou tous les récepteurs ultrasoniques parmi les au moins deux récepteurs ultrasoniques, dans lequel la deuxième direction de captation sonore indique une direction d'un deuxième point de projection d'un deuxième emplacement de source sonore sur le plan sur lequel la première surface est située par rapport au point fixe ; et le point fixe est différent du deuxième point de projection ;

l'obtention (S802) d'un deuxième composant de signal d'onde sonore du premier signal d'onde sonore dans la deuxième direction de captation sonore ; et

le réveil (S803, S804) du dispositif électronique lorsqu'une similarité entre le deuuxième composant de signal d'onde sonore et le mot de réveil prédéfini est supérieure à un troisième seuil prédéfini.

2. Dispositif électronique selon la revendication 1, dans lequel le dispositif électronique réalise également l'étape suivante :
le réveil du dispositif électronique lorsque la similarité entre le premier composant de signal d'onde sonore et le mot de réveil prédéfini est supérieure au premier seuil.

3. Dispositif électronique selon la revendication 1 ou 2, dans lequel le dispositif électronique réalise également l'étape suivante :
le maintien, par le dispositif électronique, de l'état de non-réveil lorsque la similarité entre le premier composant de signal d'onde sonore et le mot de réveil prédéfini est inférieure au deuxième seuil.

4. Dispositif électronique selon l'une quelconque des revendications 1 à 3, dans lequel le dispositif électronique réalise également l'étape suivante :
le maintien, par le dispositif électronique, de l'état de non-réveil lorsque la similarité entre le deuxième composant de signal d'onde sonore et le mot de réveil prédéfini est inférieure ou égale au troisième seuil.

5. Dispositif électronique selon l'une quelconque des revendications 1 à 4, dans lequel les Q récepteurs ultrasoniques sont différents de certains ou de tous les M microphones.

6. Dispositif électronique selon l'une quelconque des revendications 1 à 5, dans lequel le dispositif électronique comprend également : N haut-parleurs, dans lequel N ports de transmission d'ondes sonores des N haut-parleurs sont prévus sur une quatrième surface ; N est un entier positif supérieur ou égal à 1 ; et la quatrième surface est différente de la première surface ; et
dans lequel la deuxième surface est parallèle à la première surface.

7. Dispositif électronique selon la revendication 6, dans lequel le dispositif électronique comprend également :
les P émetteurs ultrasoniques sont certains ou tous les N haut-parleurs ; P est inférieur ou égal à N ; le port de transmission ultrasonique est le port de transmission des ondes sonores ; et la quatrième surface est la même que la deuxième surface.

8. Dispositif électronique selon la revendication 6, dans lequel les P émetteurs ultrasoniques sont différents de certains ou de tous les N haut-parleurs.

9. Dispositif électronique, dans un état de non-réveil, dans lequel le dispositif électronique comprend :

un processeur (110, 1503) ;
une mémoire (121, 1504) ;
M microphones (170C), dans lequel chaque microphone correspond à une entrée de captation sonore ; M entrées de captation sonore des M microphones sont prévues sur une première surface du dispositif électronique, et la première surface est sur un plan ; une distance entre deux microphones quelconques dans les M microphones est fixe ; et M est un entier positif supérieur à 1 ;

P émetteurs ultrasoniques (196, 1501), dans lequel P ports de transmission ultrasoniques des P émetteurs ultrasoniques sont prévus sur une deuxième surface ; P est un entier positif supérieur ou égal à 1 ; et la deuxième surface est différente de la première surface ;

Q récepteurs ultrasoniques (197, 1502), dans lequel chaque récepteur ultrasonique correspond à un port de réception ultrasonique ; Q ports de réception ultrasoniques des Q récepteurs ultrasoniques sont prévus sur une troisième surface du dispositif électronique, et la troisième surface est sur un plan ; une distance entre deux récepteurs ultrasoniques quelconques des Q récepteurs ultrasoniques est fixe ; Q est un entier positif supérieur à 1 ; les Q ports de réception ultrasoniques et les P ports de transmission ultrasoniques sont orientés dans des directions différentes ; et la troisième surface est différente de la première surface ; et

un programme informatique (1505), dans lequel le programme informatique est stocké dans la mémoire, et lorsque le programme informatique est exécuté par le processeur, le dispositif électronique est activé pour réaliser les étapes suivantes :

la détection d'un premier signal d'onde sonore en utilisant les M microphones ;

l'obtention, en réponse au premier signal d'onde sonore, d'une première direction de captation sonore sur la base d'une différence de temps d'arrivée du premier signal d'onde sonore arrivant à au moins deux microphones parmi les M microphones et d'une distance entre certains ou tous les microphones parmi les au moins deux microphones, dans lequel la première direction de captation sonore indique une direction d'un premier point de projection d'un premier emplacement de source sonore sur le plan sur lequel la première surface est située par rapport à un point fixe sur le plan sur lequel la première surface est située ; et le point fixe est différent du premier point de projection ;

l'obtention d'un premier composant de signal d'onde sonore du premier signal d'onde sonore dans la première direction de captation sonore ; et

lorsqu'une similarité entre le premier composant de signal d'onde sonore et un mot de réveil prédéfini est inférieure à un premier seuil prédéfini et supérieure ou égale à un deuxième seuil prédéfini, dans lequel le deuxième seuil est inférieur au premier seuil,

la transmission d'un second signal d'onde sonore en utilisant les P émetteurs ultrasoniques, dans lequel le second signal d'onde sonore est un signal ultrasonique ;

la réception du second signal d'onde sonore en utilisant les Q récepteurs ultrasoniques ;

l'obtention, en réponse au second signal d'onde sonore, d'une deuxième direction de captation sonore sur la base d'une différence de temps d'arrivée du second signal d'onde sonore arrivant à au moins deux récepteurs ultrasoniques parmi les Q récepteurs ultrasoniques et d'une distance entre certains ou tous les récepteurs ultrasoniques parmi les au moins deux récepteurs ultrasoniques, dans lequel la deuxième direction de captation sonore indique une direction d'un deuxième point de projection d'un deuxième emplacement de source sonore sur le plan sur lequel la première surface est située par rapport au point fixe ; et le point fixe est différent du deuxième point de projection ;

la détermination (S1202) d'une troisième direction de captation sonore sur la base de la première direction de captation sonore et de la deuxième direction de captation sonore, dans lequel la troisième direction de captation sonore indique une direction d'un troisième point de projection d'un troisième emplacement de source sonore sur le plan sur lequel la première surface est située par rapport au point fixe ;

l'obtention (S1203) d'un troisième composant de signal d'onde sonore du premier signal d'onde sonore dans la troisième direction de captation sonore ; et

le réveil (S1204, S1205) du dispositif électronique lorsqu'une similarité entre le troisième composant de signal d'onde sonore et le mot de réveil prédéfini est supérieure à un troisième seuil prédéfini ;

dans lequel le fait que le dispositif électronique détermine la troisième direction de captation sonore sur la base de la première direction de captation sonore et de la deuxième direction de captation sonore comporte :

(1) si une valeur absolue d'un écart de direction entre la première direction de captation sonore et la deuxième direction de captation sonore est inférieure à un quatrième seuil prédéfini, ou si une valeur absolue d'un écart de direction entre la première direction de captation sonore et la deuxième direction de captation sonore est supérieure à un cinquième seuil prédéfini, la troisième direction de captation sonore est la même que la première direction de captation sonore ; ou

(2) si la valeur absolue de l'écart de direction entre la première direction de captation sonore et la deuxième direction de captation sonore est supérieure au quatrième seuil prédéfini et inférieure au cinquième seuil, la troisième direction de captation sonore est déterminée en ajoutant, dans la première direction de captation sonore, un produit de la valeur absolue de l'écart de direction entre la première direction de captation sonore et la deuxième direction de captation sonore et un coefficient de proportion prédéfini.

10. Procédé de réveil appliqué à un dispositif électronique, dans lequel le dispositif électronique est dans un état de non-réveil, et le dispositif électronique comprend : un processeur ; une mémoire ; M microphones, dans lequel chaque microphone correspond à une entrée de captation sonore, M entrées de captation sonore des M microphones sont prévues sur une première surface du dispositif électronique, la première surface est sur un plan, une distance entre deux microphones quelconques dans les M microphones est fixe, et M est un entier positif supérieur à 1 ; P émetteurs ultrasoniques, dans lequel P ports de transmission ultrasoniques des P émetteurs ultrasoniques sont prévus sur une deuxième surface, P est un entier positif supérieur ou égal à 1, et la deuxième surface est différente de la première surface ; et Q récepteurs ultrasoniques, dans lequel chaque récepteur ultrasonique correspond à un port de réception ultrasonique, Q ports de réception ultrasoniques des Q récepteurs ultrasoniques sont prévus sur une troisième surface du dispositif électronique, la troisième surface est sur un plan, une distance entre deux récepteurs ultrasoniques quelconques des Q récepteurs ultrasoniques est fixe, Q est un entier positif supérieur 1, les Q ports de réception ultrasoniques et les P ports de transmission ultrasoniques sont orientés dans des directions différentes, et la troisième surface est différente de la première surface ; et le procédé comprend :

la détection d'un premier signal d'onde sonore en utilisant les M microphones ;
l'obtention, en réponse au premier signal d'onde sonore, d'une première direction de captation sonore sur la base d'une différence de temps d'arrivée du premier signal d'onde sonore arrivant à au moins deux microphones parmi les M microphones et d'une distance entre certains ou tous les microphones parmi les au moins deux microphones, dans lequel la première direction de captation sonore indique une direction d'un premier point de projection d'un premier emplacement de source sonore sur le plan sur lequel la première surface est située par rapport à un point fixe sur le plan sur lequel la première surface est située ; et le point fixe est différent du premier point de projection ;
l'obtention d'un premier composant de signal d'onde sonore du premier signal d'onde sonore dans la première direction de captation sonore ; et
lorsqu'une similarité entre le premier composant de signal d'onde sonore et un mot de réveil prédéfini est inférieure à un premier seuil prédéfini et supérieure ou égale à un deuxième seuil prédéfini,
la transmission d'un second signal d'onde sonore en utilisant les P émetteurs ultrasoniques, dans lequel le second signal d'onde sonore est un signal ultrasonique ;
la réception du second signal d'onde sonore en utilisant les Q récepteurs ultrasoniques ;
l'obtention, en réponse au second signal d'onde sonore, d'une deuxième direction de captation sonore sur la base d'une différence de temps d'arrivée du second signal d'onde sonore arrivant à au moins deux récepteurs ultrasoniques parmi les Q récepteurs ultrasoniques et d'une distance entre certains ou tous les récepteurs ultrasoniques parmi les au moins deux récepteurs ultrasoniques, dans lequel la deuxième direction de captation sonore indique une direction d'un deuxième point de projection d'un deuxième emplacement de source sonore sur le plan sur lequel la première surface est située par rapport au point fixe ; et le point fixe est différent du deuxième point de projection ;
l'obtention d'un deuxième composant de signal d'onde sonore du premier signal d'onde sonore dans la deuxième direction de captation sonore ; et
le réveil du dispositif électronique lorsqu'une similarité entre le deuxième composant de signal d'onde sonore et le mot de réveil prédéfini est supérieure à un troisième seuil prédéfini.

11. Procédé selon la revendication 10, dans lequel le procédé comprend également :
le réveil du dispositif électronique lorsque la similarité entre le premier composant de signal d'onde sonore et le mot de réveil prédéfini est supérieure au premier seuil.

12. Procédé selon la revendication 10 ou 11, dans lequel le procédé comprend également :
le maintien, par le dispositif électronique, de l'état de non-réveil lorsque la similarité entre le premier composant de signal d'onde sonore et le mot de réveil prédéfini est inférieure au deuxième seuil.

13. Procédé selon l'une quelconque des revendications 10 à 12, dans lequel le procédé comprend également :
le maintien, par le dispositif électronique, de l'état de non-réveil lorsque la similarité entre le deuxième composant de signal d'onde sonore et le mot de réveil prédéfini est inférieure ou égale au troisième seuil.

14. Procédé de réveil appliqué à un dispositif électronique, dans lequel le dispositif électronique est dans un état de non-réveil, et le dispositif électronique comprend : un processeur ; une mémoire ; M microphones, dans lequel chaque microphone correspond à une entrée de captation sonore, M entrées de captation sonore des M microphones sont prévues sur une première surface du dispositif électronique, la première surface est sur un plan, une distance entre deux microphones quelconques dans les M microphones est fixe, et M est un entier positif supérieur à 1 ; P émetteurs ultrasoniques, dans lequel P ports de transmission ultrasoniques des P émetteurs ultrasoniques sont prévus sur une deuxième surface, P est un entier positif supérieur ou égal à 1, et la deuxième surface est différente de la première surface ; et Q récepteurs ultrasoniques, dans lequel chaque récepteur ultrasonique correspond à un port de réception ultrasonique, Q ports de réception ultrasoniques des Q récepteurs ultrasoniques sont prévus sur une troisième surface du dispositif électronique, la troisième surface est sur un plan, une distance entre deux récepteurs ultrasoniques quelconques des Q récepteurs ultrasoniques est fixe, Q est un entier positif supérieur 1, les Q ports de réception ultrasoniques et les P ports de transmission ultrasoniques sont orientés dans des directions différentes, et la troisième surface est différente de la première surface ; et le procédé comprend :

la détection d'un premier signal d'onde sonore en utilisant les M microphones ;

l'obtention, en réponse au premier signal d'onde sonore, d'une première direction de captation sonore sur la base d'une différence de temps d'arrivée du premier signal d'onde sonore arrivant à au moins deux microphones parmi les M microphones et d'une distance entre certains ou tous les microphones parmi les au moins deux microphones, dans lequel la première direction de captation sonore indique une direction d'un premier point de projection d'un premier emplacement de source sonore sur le plan sur lequel la première surface est située par rapport à un point fixe sur le plan sur lequel la première surface est située ; et le point fixe est différent du premier point de projection ;

l'obtention d'un premier composant de signal d'onde sonore du premier signal d'onde sonore dans la première direction de captation sonore ; et

lorsqu'une similarité entre le premier composant de signal d'onde sonore et un mot de réveil prédéfini est inférieure à un premier seuil prédéfini et supérieure ou égale à un deuxième seuil prédéfini, dans lequel le deuxième seuil est inférieur au premier seuil,

la transmission d'un second signal d'onde sonore en utilisant les P émetteurs ultrasoniques, dans lequel le second signal d'onde sonore est un signal ultrasonique ;

la réception du second signal d'onde sonore en utilisant les Q récepteurs ultrasoniques ;

l'obtention, en réponse au second signal d'onde sonore, d'une deuxième direction de captation sonore sur la base d'une différence de temps d'arrivée du second signal d'onde sonore arrivant à au moins deux récepteurs ultrasoniques parmi les Q récepteurs ultrasoniques et d'une distance entre certains ou tous les récepteurs ultrasoniques parmi les au moins deux récepteurs ultrasoniques, dans lequel la deuxième direction de captation sonore indique une direction d'un deuxième point de projection d'un deuxième emplacement de source sonore sur le plan sur lequel la première surface est située par rapport au point fixe ; et le point fixe est différent du deuxième point de projection ;

la détermination (S1202) d'une troisième direction de captation sonore sur la base de la première direction de captation sonore et de la deuxième direction de captation sonore, dans lequel la troisième direction de captation sonore indique une direction d'un troisième point de projection d'un troisième emplacement de source sonore sur le plan sur lequel la première surface est située par rapport au point fixe ;

l'obtention (S1203) d'un troisième composant de signal d'onde sonore du premier signal d'onde sonore dans la troisième direction de captation sonore ; et

le réveil (S1204, S1205) du dispositif électronique lorsqu'une similarité entre le troisième composant de signal d'onde sonore et le mot de réveil prédéfini est supérieure à un troisième seuil prédéfini ;

dans lequel le fait que le dispositif électronique détermine la troisième direction de captation sonore sur la base de la première direction de captation sonore et de la deuxième direction de captation sonore comporte :

(1) si une valeur absolue d'un écart de direction entre la première direction de captation sonore et la deuxième direction de captation sonore est inférieure à un quatrième seuil prédéfini, ou si une valeur absolue d'un écart de direction entre la première direction de captation sonore et la deuxième direction de captation sonore est supérieure à un cinquième seuil prédéfini, la troisième direction de captation sonore est la même que la première direction de captation sonore ; ou

(2) si la valeur absolue de l'écart de direction entre la première direction de captation sonore et la deuxième direction de captation sonore est supérieure au quatrième seuil prédéfini et inférieure au cinquième seuil, la troisième direction de captation sonore est déterminée en ajoutant, dans la première direction de captation sonore, un produit de la valeur absolue de l'écart de direction entre la première direction de captation sonore et la deuxième direction de captation sonore et un coefficient de proportion prédéfini.

15. Support de stockage lisible par ordinateur, dans lequel le support de stockage lisible par ordinateur comprend un programme informatique, et lorsque le programme informatique s'exécute sur un dispositif électronique, le dispositif électronique est activé pour réaliser le procédé selon l'une quelconque des revendications 10 à **14.**

FIG. 1A

FIG. 1B

FIG. 1C

Electronic device 100

FIG. 2

100　　170C

Electronic device

Ultrasonic positioning

Obstacle location B3

200

Voice signal

Sound source location B1

TOA/TDOA positioning

Sound source location B4

Sound source location B2

FIG. 3

FIG. 4

FIG. 5

FIG. 6

Wake-up word model

Similarity 1

Sound wave signal A'

FIG. 7

Similarity

Second threshold        First threshold

| An electronic device wakes up |

| Obtain an obstacle location by using an ultrasonic signal | — S801

| An electronic device continues to keep a non-wake-up state |

| Extract a sound wave signal A" in a second sound pickup direction | — S802

| Calculate a similarity 2 between the sound wave signal A" and a wake-up word | — S803

The similarity 2 is greater than a third threshold

No      Yes

| An electronic device continues to keep a non-wake-up state | S805

| An electronic device wakes up | — S804

FIG. 8

Ultrasonic signal 1

200

1001    1002    1003

1011    1012    1013

Electronic
device
100

FIG. 9

FIG. 10

FIG. 11

Similarity

Second threshold ●————————————— First threshold ●—————————————→

An electronic device
wakes up

Obtain an obstacle
location by using an
ultrasonic signal — S1201

An electronic device
continues to keep a
non-wake-up state

Determine a third sound
pickup direction based on
a second sound pickup
direction and a first
sound pickup direction — S1202

Extract a sound wave
signal A''' in the third
sound pickup direction — S1203

Calculate a similarity 3
between the sound wave
signal A''' and a wake-up
word — S1204

The
similarity 3 is
greater than a third
threshold

No | Yes

An electronic device
continues to keep a
non-wake-up state — S1206

An electronic device
wakes up — S1205

FIG. 12

FIG. 13

Third sound
pickup direction
→

Sound wave signal A

Sound wave signal A
component 1401

Third sound
pickup direction
→

Sound wave signal A
...

Sound wave signal A
component 1401
...

Third sound
pickup direction
→

Sound wave signal A

Sound wave signal A
component 1401

Fusion
→

Sound wave signal A'"

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Using Sonar for Liveness Detection to Protect Smart Speakers against Remote Attackers. **YEONJOON LEE AC KR et al.** Proceedings of the ACM on interactive, mobile, wearable and ubiquitous technologies. ACMPUB27, 18 March 2020, vol. 4, 1-28